(19) Europäisches Patentamt
European Patent Office
Office européen des brevets

(11) **EP 4 786 178 A1**

(12) **EUROPEAN PATENT APPLICATION**
published in accordance with Art. 153(4) EPC

(43) Date of publication:
05.08.2026 Bulletin 2026/32

(51) International Patent Classification (IPC):
**B32B 27/32** (2006.01) **B65D 30/02** (2006.01)
**B65D 65/40** (2006.01)

(21) Application number: 24872301.7

(22) Date of filing: 25.09.2024

(52) Cooperative Patent Classification (CPC):
**B32B 27/32; B65D 29/00; B65D 65/40**

(86) International application number:
**PCT/JP2024/034232**

(87) International publication number:
**WO 2025/070515 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.09.2023 JP 2023166131

(71) Applicant: **Toppan Holdings Inc.**
**Tokyo 110-0016 (JP)**

(72) Inventors:
• **TAKEI, Ryo**
**Tokyo 110-0016 (JP)**
• **KAMEGAWA, Yuki**
**Tokyo 110-0016 (JP)**

(74) Representative: **Hoffmann Eitle**
**Patent- und Rechtsanwälte PartmbB**
**Arabellastraße 30**
**81925 München (DE)**

(54) **GAS BARRIER FILM, LAMINATE, PACKAGING BAG, AND PACKAGE**

(57) A gas barrier film includes: a substrate containing polyethylene; and a barrier layer formed on one surface of the substrate, the barrier layer including at least one of an inorganic layer and a gas barrier coat, wherein, in an X-ray diffraction pattern measured by a parallel beam method of X-ray diffraction for the substrate, a degree of crystallinity, which is a ratio of a crystalline peak area to a total peak area in a diffraction angle range of 10° to 30°, is 35.0% or less, and a ratio of a crystalline peak area of the (200) plane of polyethylene to a total peak area is 2.0% or greater.

FIG.1

EP 4 786 178 A1

## Description

[Technical Field]

The present disclosure relates to gas barrier films, laminates, packaging bags, and packages.

[Background Art]

Packaging bags used for packaging food, pharmaceutical products, etc. are required to have properties of preventing permeation of moisture, oxygen and other gases that may degrade the contents, that is, gas barrier properties, in order to prevent the contents from degradation and decay and retain the functions and quality of the contents. For this reason, laminates having gas barrier properties (gas barrier films) are used for these packaging bags.

Known gas barrier films include those in which a gas barrier layer made of a material having gas barrier properties is provided on the surface of a substrate. Known gas barrier layers include metal foils, metal vapor deposition films, and coats formed by wet coating.

Examples of the coats that exhibit oxygen barrier properties include resin films formed of coating agents containing water-soluble polymers and resins such as polyvinylidene chloride, and inorganic lamellar mineral composite resin films formed of coating agents containing water-soluble polymers and inorganic lamellar minerals (PTL 1).

Further, gas barrier layers that have been proposed include a gas barrier layer in which a vapor-deposited thin film layer made of an inorganic oxide and a gas barrier composite film containing an aqueous polymer, an inorganic lamellar compound and a metal alkoxide are sequentially laminated (PTL 2), and a gas barrier layer containing a polyvalent metal salt of a polycarboxylic acid polymer, which is a reaction product of a carboxy group of a polycarboxylic acid polymer and a polyvalent metal compound (PTL 3).

[Citation List]

[Patent Literature]

   PTL 1: JP 6191221 B

   PTL 2: JP 2000-254994 A

   PTL 3: JP 4373797 B

[Summary of Invention]

[Technical Problem]

However, gas barrier films with the above-mentioned gas barrier layer may have insufficient peel strength at the surface of the substrate, and when bonded to a heat seal layer, the substrate may peel off easily, resulting in insufficient adhesion strength between the substrate and the heat seal layer.

In addition, when a polyethylene film is used as a substrate for a gas barrier film, applying heat sterilization treatment such as boiling treatment may deteriorate the water vapor barrier properties of the gas barrier film, resulting in the problem that sufficient water vapor barrier properties cannot be ensured.

The present disclosure has been made in view of the above issues, and aims to provide a gas barrier film, a laminate, a packaging bag, and a package that have excellent water vapor barrier properties, can suppress deterioration of the water vapor barrier properties even after undergoing heat sterilization treatment, and have high adhesion to a heat seal layer.

[Solution to Problem]

An aspect of the present disclosure provides a gas barrier film including: a substrate containing polyethylene; and a barrier layer formed on one surface of the substrate, the barrier layer including at least one of an inorganic layer and a gas barrier coat, wherein, in an X-ray diffraction pattern measured by a parallel beam method of X-ray diffraction for the substrate, a degree of crystallinity, which is a ratio of a crystalline peak area to a total peak area in a diffraction angle range of 10° to 30°, is 35.0% or less, and a ratio of a crystalline peak area of the (200) plane of polyethylene to a total peak area is 2.0% or greater.

The gas barrier film has excellent water vapor barrier properties, can suppress deterioration of the water vapor barrier properties even after undergoing heat sterilization treatment, and has high adhesion to the heat seal layer.

The polyethylene contained in the gas barrier film preferably has a density of 0.940 g/cm$^3$ or greater.

In this case, the substrate is more likely to be prevented from being stretched and wrinkled during the roll processing of the gas barrier film. Further, occurrence of cracking in the barrier layer is more likely to be prevented, and therefore deterioration of the water vapor barrier properties of the gas barrier film is suppressed.

The substrate is preferably a non-oriented film.

In this case, higher adhesion strength is more likely achieved between the substrate and other layers.

The inorganic layer is preferably made of aluminum oxide or silicon oxide.

In this case, aluminum oxide and silicon oxide are excellent in productivity, and excellent in oxygen barrier properties and water vapor barrier properties under heating conditions or moist heat conditions.

The gas barrier coat is preferably a coat obtained using a composition containing at least one selected from the group consisting of a metal alkoxide, a hydrolysate of a metal alkoxide, a reaction product of a metal alkoxide and a reaction product of a hydrolysate of a metal alkoxide, and a water-soluble polymer.

In this case, the gas barrier film has further improved oxygen barrier properties and further improved water vapor barrier properties.

The composition preferably further contains at least one selected from the group consisting of a silane coupling agent, a hydrolysate of a silane coupling agent, a reaction product of a silane coupling agent, and a reaction product of a hydrolysate of a silane coupling agent.

In this case, the gas barrier film has further improved oxygen barrier properties.

The gas barrier coat preferably contains a polyvalent metal salt of a polycarboxylic acid polymer.

In this case, the gas barrier film has further improved oxygen barrier properties and further improved water vapor barrier properties.

The substrate is preferably a multilayer polyethylene film having a surface layer, an intermediate layer and a back layer, the multilayer polyethylene film being formed by a blown film extrusion process in which each of the polyethylenes constituting the surface layer, the intermediate layer and the back layer are loaded into an extruder, the polyethylenes are melt-kneaded and then discharged from the extruder through a die.

In this case, functions required for the gas barrier film can be individually imparted to each of the surface layer, the intermediate layer and the back layer, making it easier to improve processing stability, heat resistance, mechanical strength, barrier properties, and the like.

Another aspect of the present disclosure provides a laminate including: the gas barrier film described above; and a heat seal layer bonded to the gas barrier film with the barrier layer being sandwiched between the substrate and the heat seal layer.

According to the laminate, since the gas barrier film and the heat seal layer have high adhesion, the laminate has sufficient durability. Further, since the gas barrier film has excellent water vapor barrier properties and suppresses deterioration of the water vapor barrier properties even after undergoing heat sterilization treatment, the laminate has excellent water vapor barrier properties and suppresses deterioration of the water vapor barrier properties even after undergoing heat sterilization treatment.

The heat seal layer preferably contains polyethylene.

According to the laminate, since both the substrate and the heat seal layer contain polyethylene, the laminate has recyclability.

The laminate may further include an adhesive layer that bonds the gas barrier film and the heat seal layer to each other.

The adhesive layer is preferably obtained using a gas barrier adhesive.

In this case, since the adhesive layer has gas barrier properties, the laminate has further improved gas barrier properties.

The adhesive layer is preferably obtained using a solvent-free adhesive.

In this case, environmental load of the laminate can be reduced.

The solvent-free adhesive preferably contains a two-component curing type urethane adhesive.

In this case, since the adhesion between the adhesive layer and the barrier layer or the heat seal layer is further improved, the laminate has sufficient durability.

The laminate may further include a second adhesive layer and a surface substrate layer in this order on a surface of the substrate on a side opposite to that facing the heat seal layer.

In this case, since the substrate is reinforced by the surface substrate layer via the second adhesive layer, the laminate has further improved strength.

Still another aspect of the present disclosure provides a packaging bag formed using the laminate described above.

The packaging bag has excellent water vapor barrier properties, and can suppress deterioration of the water vapor barrier properties even after undergoing heat sterilization treatment. Further, since the gas barrier film has high adhesion to the heat seal layer, the packaging bag has sufficient durability.

Still another aspect of the present disclosure provides a package including: the packaging bag described above; and contents contained in the packaging bag.

Since the packaging bag has excellent water vapor barrier properties, and can suppress deterioration of the water vapor barrier properties even after undergoing heat sterilization treatment, the package can prevent the quality of the contents contained in the packaging bag from deteriorating due to the contents being exposure to water vapor. Further, since the gas barrier film has high adhesion to the heat seal layer, the package has sufficient durability.

Still another aspect of the present disclosure provides a laminate further including: an adhesive layer between the barrier layer and the heat seal layer; and an undercoat layer between the substrate and the barrier layer, the barrier layer including an inorganic layer and a gas barrier coat in this order from the undercoat layer side, wherein the adhesive layer is a layer that bonds the gas barrier coat and the heat seal layer to each other, the substrate is a non-oriented film composed of a surface layer, an intermediate layer and a back layer, the substrate has a density of 0.940 g/cm$^3$ or greater, the substrate has a thickness of 15 $\mu$m to 35 $\mu$m, the surface layer and the back layer have the same thickness, a ratio of a thickness of the intermediate layer to the thickness of the surface layer is from 2 to 3, the inorganic layer is made of silicon oxide, the undercoat layer has a thickness of 0.01 $\mu$m to 0.1 $\mu$m, the inorganic layer has a thickness of 10 nm to 30 nm, the gas barrier coat is a coat obtained using a composition containing at least one selected from the group consisting of a metal alkoxide, a hydrolysate of a metal alkoxide, a reaction product of a metal alkoxide and a reaction product of a hydrolysate of a metal alkoxide, and a water-soluble polymer, the heat seal layer is a layer made of linear low-density polyethylene, the adhesive layer is a layer obtained using a solvent-free adhesive, the X-ray diffraction pattern is an X-ray diffraction pattern obtained by a 2$\theta$/$\theta$ scan in the diffraction angle range of 10° to 30° in out-of-plane measurement using a wide-angle X-ray diffractometer, when a crystalline peak area obtained by separating and analyzing crystalline peaks derived from crystalline components and halo patterns derived from amorphous components in the X-ray diffraction pattern is S1, a halo pattern area is S2, and a crystalline peak area corresponding to a (200) plane of polyethylene obtained by separating and analyzing peaks corresponding to a (110) plane and a (200) plane of polyethylene for the crystalline peaks is S3, the degree of crystallinity is obtained by the following formula (1) and the ratio is obtained by the following formula (2), the crystallinity is 15.0% to 35.0%, and the ratio is from 2.0% to 7.0%:

$$\text{Degree of crystallinity (\%)} = 100 \times S1 / (S1+S2) \ldots (1)$$

$$\text{Ratio (\%)} = 100 \times S3 / (S1+S2) \ldots (2)$$

In this case, the laminate has further improved water vapor barrier properties, and can effectively suppress deterioration of the water vapor barrier properties even after undergoing heat sterilization treatment. Further, since the gas barrier film has high adhesion to the heat seal layer, the laminate has further improved durability.

[Advantageous Effects of Invention]

The present disclosure provides a gas barrier film, a laminate, a packaging bag, and a package that have excellent water vapor barrier properties, can suppress deterioration of the water vapor barrier properties even after undergoing heat sterilization treatment, and have high adhesion to a heat seal layer.

[Brief Description of Drawings]

Fig. 1 is a cross-sectional view schematically illustrating an embodiment of a laminate according to the present disclosure.

Fig. 2 is a cross-sectional view schematically illustrating another embodiment of the laminate according to the present disclosure.

Fig. 3 is a cross-sectional view schematically illustrating another embodiment of the laminate according to the present disclosure.

Fig. 4 is a cross-sectional view schematically illustrating an embodiment of a package according to the present disclosure.

[Description of Embodiments]

[Laminate]

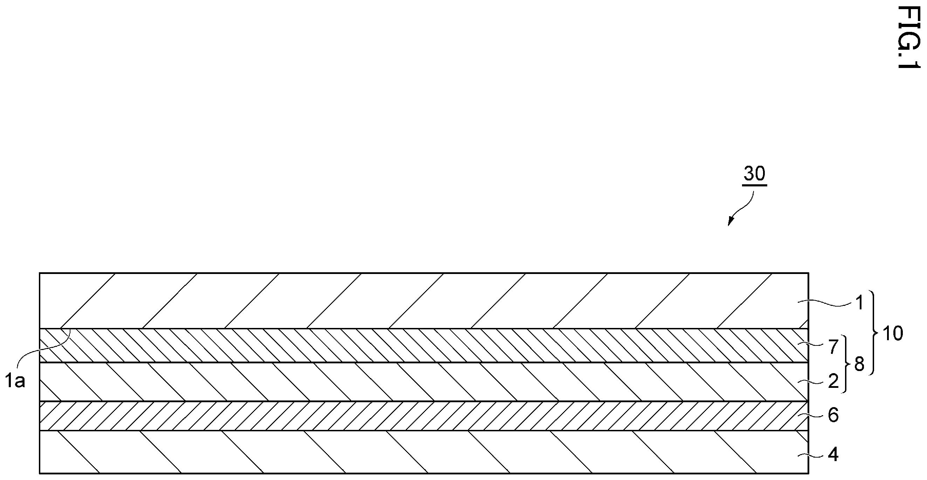

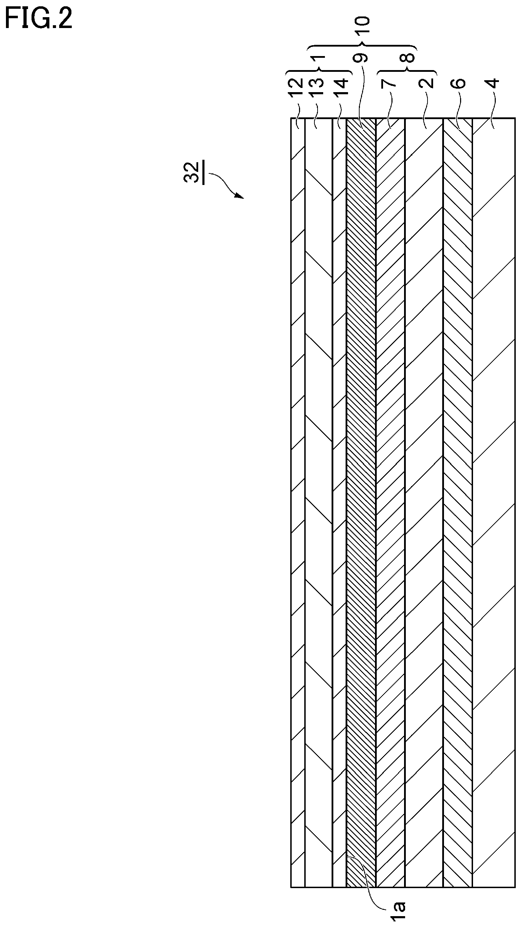

With reference to Figs. 1 and 2, embodiments of a laminate of the present disclosure will be described. Fig. 1 is a cross-sectional view schematically illustrating an embodiment of a laminate according to the present disclosure, and Fig. 2 is a cross-sectional view schematically illustrating another embodiment of the laminate according to the present disclosure.

As shown in Fig. 1, a laminate 30 includes a gas barrier film 10 and a heat seal layer 4. The gas barrier film 10 is an embodiment of the gas barrier film according to the present disclosure. The gas barrier film 10 and the heat seal layer 4 may be bonded to each other via an adhesive layer 6.

The gas barrier film 10 includes a substrate 1, and a barrier layer 8 formed on a first surface 1a, which is one surface of the substrate 1.

In an X-ray diffraction pattern measured by a parallel beam method of X-ray diffraction for the substrate 1, the degree of crystallinity, which is the ratio of the crystalline peak area to the total peak area in the diffraction angle range of 10° to 30°, is 35.0% or less, and the ratio of the crystalline peak area of the (200) plane of polyethylene to the total peak area is 2.0% or greater.

The barrier layer 8 may include either an inorganic layer 7 or a gas barrier coat 2, or may include both the inorganic layer 7 and the gas barrier coat 2 as shown in Fig. 1.

The gas barrier film 10 may further include an undercoat layer 9 on the first surface 1a of the substrate 1 as in a laminate 32 shown in Fig. 2. In other words, the gas barrier film 10 may further include an undercoat layer 9 between the substrate 1 and the barrier layer 8.

The gas barrier film 10 has excellent water vapor barrier properties, can suppress deterioration of the water vapor barrier properties even after undergoing heat sterilization treatment, and has high adhesion to the heat seal layer 4. Therefore, the laminate 30 has sufficient durability. Since the gas barrier film 10 has excellent water vapor barrier properties and suppresses deterioration of the water vapor barrier properties even after undergoing heat sterilization treatment, the laminate 30 has excellent water vapor barrier properties and suppresses deterioration of the water vapor barrier properties even after undergoing heat sterilization treatment.

The following description will be given of each of the configurations of the gas barrier film 10, the adhesive layer 6 and the heat seal layer 4.

<Gas Barrier Film>

(1) Substrate

The substrate 1 contains polyethylene (PE). The substrate 1 may be composed of a single-layer film formed of a PE layer containing polyethylene, or may be composed of a laminated film including at least one PE layer containing polyethylene. When the substrate 1 is a laminated film, the substrate 1 may include a surface layer 12, an intermediate layer 13 and a back layer 14 as shown in Fig. 2. The surface layer 12 is a layer constituting the surface (first surface 1a) of the substrate 1 opposite to that facing the barrier layer 8, the back layer 14 is a layer constituting the surface (second surface, which is the surface of the substrate 1 opposite the first surface 1a) of the substrate 1 facing the barrier layer 8, and the intermediate layer 13 is a layer interposed between the surface layer 12 and the back layer 14. The laminate film may further include, in addition to the PE layer, a resin layer containing a resin other than polyethylene or a non-resin layer containing metal, wood, paper or ceramics.

The substrate 1 may preferably be a multilayer polyethylene film having a surface layer 12, an intermediate layer 13 and a back layer 14.

From the perspective of recyclability, it is preferred that the layer made of resin in the substrate 1 is a layer made of resin containing polyethylene. When the substrate 1 is a laminated film, all the layers included in the laminated film are preferably layers made of resin containing polyethylene.

The polyethylene may be at least one polymer selected from a homopolymer, a random copolymer, and a block copolymer.

The homopolymer is a polyethylene containing only ethylene as a constituent unit, and the random copolymer is a polyethylene in which ethylene as the main monomer and a comonomer different from ethylene are randomly copolymerized to form a homogeneous phase. Further, the block copolymer is a polyethylene in which ethylene as the main monomer and the above-mentioned comonomer are copolymerized in a block form or in a rubber form to form a heterogeneous phase.

Examples of the comonomer include $\alpha$-olefins such as butene-1, hexene-1, octene-1, and 4-methylpentene-1.

The density of the polyethylene contained in the substrate 1 is preferably 0.940 g/cm³ or greater, and more preferably 0.945 g/cm³ or greater. When the density of the polyethylene is 0.940 g/cm³ or greater, the substrate 1 is more likely to be prevented from being stretched and wrinkled during the roll processing of the gas barrier film 10. Further, occurrence of cracking in the barrier layer 8 (in particular, the inorganic layer 7) is more likely to be prevented.

The substrate 1 may have a multilayer structure including multiple layers (films) each containing polyethylene having a different density. The substrate 1 is preferably multilayered as appropriate in consideration of the processability, rigidity, stiffness, heat resistance, powder loss during transport, and the like of the film constituting each layer.

The film constituting the substrate 1 can be prepared by appropriately selecting and using a high density polyolefin, a medium density polyolefin, a low density polyolefin, or the like. In this case as well, the density of the substrate 1 as a whole is preferably 0.940 g/cm³ or greater, and more preferably 0.945 g/cm³ or greater.

The substrate 1 may be a non-oriented film, or may be an oriented film such as a uniaxially oriented film or a biaxially oriented film, but is preferably a non-oriented film since it is more likely to achieve higher adhesion strength with other layers.

Each layer of the substrate 1 may contain additives such as fillers, anti-blocking agents, slip agents, antistatic agents, plasticizers, lubricants or antioxidants. These additives may be used singly or in combination of two or more. Further, the content or content ratio of each additive may differ in each layer of the substrate 1.

The substrate 1 having multiple layers can be prepared by extrusion coating, co-extrusion coating, sheet molding, co-extrusion blow molding, or blown film extrusion.

When the substrate 1 is a multilayer polyethylene film having the surface layer 12, the intermediate layer 13 and the back layer 14, the substrate 1 is preferably formed by a blown film extrusion process in which each of the polyethylenes constituting the surface layer 12, the intermediate layer 13 and the back layer 14 are loaded into an extruder, the polyethylenes are melt-kneaded, and then discharged from the extruder through a die (for example, a die for three layers). In this case, functions required for the gas barrier film can be individually imparted to each of the surface layer 12, the intermediate layer 13 and the back layer 14, making it easier to improve processing stability, heat resistance, mechanical strength, barrier properties, and the like.

The surface (first surface 1a) of the substrate 1 on a side in contact with the barrier layer 8 may be subjected to a surface treatment, such as chemical treatment, solvent treatment, corona treatment, low-temperature plasma treatment or an ozone treatment, in order to improve adhesion to the barrier layer 8. Further, a similar surface treatment may be applied to a second surface of the substrate 1, which is the surface opposite the first surface 1a, for bonding to another layer such as a print layer.

The thickness of the substrate 1 is not specifically limited, and can be appropriately determined depending on the price and application, taking into consideration the suitability as a packaging material and lamination suitability of other coats. Practically, the thickness of the substrate 1 is preferably 3 $\mu$m to 200 $\mu$m, more preferably 5 $\mu$m to 120 $\mu$m, even more preferably 6 $\mu$m to 100 $\mu$m, particularly preferably 10 $\mu$m to 40 $\mu$m, and most preferably 15 $\mu$m to 35 $\mu$m.

When the substrate 1 includes the surface layer 12, the intermediate layer 13 and the back layer 14, the thickness of each layer is not specifically limited as long as the total thickness of these layers does not exceed the thickness of the substrate 1. The thicknesses of the surface layer 12 and the back layer 14 may be the same or different, but are preferably the same. Further, the ratio of the thickness of the intermediate layer 13 to the thickness of the surface layer 12 is not specifically limited, but is preferably from 2 to 3.

(Method of Determining Degree of Crystallinity)

The degree of crystallinity of the substrate 1 is determined based on an X-ray diffraction pattern obtained by measurement by an X-ray diffraction method using a parallel beam optical system (parallel beam method of X-ray diffraction). A method of determining the degree of crystallinity of the substrate 1 will be described below.

First, the X-ray diffraction pattern of the substrate 11 is obtained by a $2\theta/\theta$ scan in the diffraction angle range of 10° to 30° in out-of-plane measurement using a wide-angle X-ray diffractometer manufactured by Rigaku Holdings Corporation. The X-rays used are characteristic X-ray CuK$\alpha$, the X-rays are collimated by a multilayer mirror and made incident on the substrate 1, and a scintillation detector provided with a flat collimator is used as the light receiving unit.

The obtained X-ray diffraction pattern shows peaks (crystalline peaks) derived from crystalline components and halo patterns derived from amorphous components in the diffraction angle range of 10° to 30°. These are separated and analyzed to determine a crystalline peak area S1 and a halo pattern area S2, and when the sum of these areas S (= S1+S2) is taken as the total peak area, the degree of crystallinity is determined based on the following formula (1).

$$\text{Degree of crystallinity (\%)} = 100 \times \text{S1/S} (= \text{S1+S2}) \ldots (1)$$

Further, focusing methods are known for X-ray diffraction techniques other than the parallel beam method, but with the focusing method, when measuring samples with asperities on the surface such as resin films, the measurement results are likely to be affected by peak broadening or the like due to misalignment of the measurement surface. On the other hand, with the parallel beam method, even for samples having asperities on the surface, the effect of misalignment of the measurement surface on the measurement results is small.

The degree of crystallinity of the substrate 1 is 35.0% or less. When the degree of crystallinity is 35.0% or less, the gas barrier film 10 has high adhesion to the heat seal layer 4. Further, the gas barrier film 10 has excellent water vapor barrier properties, and can suppress deterioration of the water vapor barrier properties even after undergoing heat sterilization treatment.

The degree of crystallinity of the substrate 1 may be 30.0% or less, or 25.0% or less. Further, the degree of crystallinity may be 5.0% or greater, 10.0% or greater, 15.0% or greater, or 20.0% or greater. The range of the degree of crystallinity may be 5.0% to 35.0%, 5.0% to 30.0%, 10.0% to 35.0%, 10.0% to 30.0%, 15.0% to 35.0%, or 15.0% to 30.0%.

Further, since the substrate 1 contains polyethylene, when a $2\theta/\theta$ scan is performed in the diffraction angle range of 10° to 30°, two sharp peaks of crystalline components corresponding to the (110) plane and (200) plane of polyethylene and a broad halo pattern of amorphous components are observed.

These are separated and analyzed to determine a crystalline peak area S3 corresponding to the (200) plane of polyethylene, and the ratio R of the crystalline peak area S3 of the (200) plane of polyethylene to the total peak area S is determined based on the following formula (2).

$$R(\%) = 100 \times S3/S \ (= S1+S2) \ ... \ (2)$$

The ratio R of the crystalline peak area S3 of the (200) plane of polyethylene to the total peak area S is 2.0% or greater. When the ratio R is 2.0% or greater, the gas barrier film 10 has excellent water vapor barrier properties, and can suppress deterioration of the water vapor barrier properties even after undergoing heat sterilization treatment.

The ratio R may be 2.0% or greater, 3.0% or greater, or 4.0% or greater. Further, the ratio R may be less than 35.0%, 15.0% or less, 10.0% or less, or 7.0% or less. The range of the ratio R may be 2.0% to 15.0%, 2.0% to 10.0%, or 2.0% to 7.0%.

The degree of crystallinity of the substrate 1 can be adjusted by controlling the degree of stretching of the polyethylene film used for the substrate 1 or the thermal history during or after the production of the film. For example, when the substrate 1 is gradually cooled after the formation of the substrate 1, the degree of crystallinity increases, and when it is rapidly cooled, the degree of crystallinity decreases. It is also possible to improve the degree of crystallinity of the substrate 1 by blending an additive such as a crystal nucleating agent.

The ratio R can be adjusted by adjusting the density of the polyethylene resin, the comonomer ratio, or the like. For example, increasing the density of the polyethylene resin or decreasing the comonomer ratio enhances the (200) orientation and increases the ratio R, and decreasing the density of the polyethylene resin or increasing the comonomer ratio weakens the (200) orientation and decreases the ratio R.

(2) Undercoat Layer

The underlayer 9 is a layer that contains an organic polymer as a main component, and may also be called a primer layer. Providing the undercoat layer 9 improves film-formation properties of the barrier layer 8 and enables formation of denser or less defective inorganic layer 7 and gas barrier coat 2, resulting in the gas barrier film 10 having further improved water vapor barrier properties. In addition, since the adhesion between the substrate 1 and the barrier layer 8 improves, the gas barrier film 10 has further improved durability.

The organic polymer content of the underlayer 9 may be, for example, 70 mass% or greater, or 80 mass% or greater.

Examples of the organic polymer include polyacrylic resins, polyester resins, polycarbonate resins, polyurethane resins, polyamide resins, polyolefin resins, polyimide resins, melamine resins and phenolic resins.

The undercoat layer 9 preferably contains, as the organic polymer, at least one of polyacrylic resins, polyol resins, polyurethane resins, polyamide resins, and reaction products of these organic polymers. In this case, since the decrease in the adhesion between the substrate 1 and the barrier layer 8 during application of heat sterilization treatment is suppressed, the gas barrier film 10 can suppress deterioration in durability and water vapor barrier properties even after undergoing heat sterilization treatment.

The undercoat layer 9 may contain a silane coupling agent, an organic titanate, a modified silicone oil, or the like.

The organic polymer used for the undercoat layer 9 is more preferably an organic polymer having a urethane bond formed by the reaction between a polyol having two or more hydroxyl groups at the polymer terminal and an isocyanate compound, or an organic polymer containing a reaction product of a polyol having two or more hydroxyl groups at the polymer terminal and an organosilane compound such as a silane coupling agent or a hydrolysate thereof. These may be used singly or in combination of two or more.

Examples of the polyols include acrylic polyols, polyvinyl acetals, polystyle polyols, polyurethane polyols, and the like.

Acrylic polyol may be obtained by polymerizing acrylic acid derivative monomer or by copolymerizing acrylic acid derivative monomer and other monomers. Examples of acrylic acid derivative monomer include ethyl methacrylate, hydroxyethyl methacrylate, hydroxypropyl methacrylate, and hydroxybutyl methacrylate. Examples of monomer copolymerized with acrylic acid derivative monomer include styrene and the like.

The isocyanate compound has the effect of enhancing the adhesion between the substrate 1 and the inorganic layer 7 due to the urethane bond formed by reaction with the polyol. That is, the isocyanate compound functions as a crosslinking agent or a curing agent. Examples of the isocyanate compound include monomers of aromatic tolylene diisocyanate (TDI), diphenylmethane diisocyanate (MDI), aliphatic xylene diisocyanate (XDI), hexamethylene diisocyanate (HMDI), isophorone diisocyanate (IPDI), and the like, polymers thereof, and derivatives thereof. The isocyanate compounds may be used singly or in combination of two or more.

Examples of the silane coupling agent include vinyl trimethoxy silane, $\gamma$-chloropropyl methyl dimethoxy silane, $\gamma$-chloropropyl trimethoxy silane, glycidoxy propyl trimethoxy silane, $\gamma$-methacryloxy propyl trimethoxy silane, and $\gamma$-methacryloxy propyl methyldimethoxy silane.

The organosilane compound may be hydrolysate of these silane coupling agents. The organosilane compound may contain one of the above-mentioned silane coupling agents and hydrolysates thereof alone, or may contain two or more of them in combination.

The undercoat layer 9 may be formed using a mixed solution obtained by blending the above-mentioned components in an organic solvent at an arbitrary ratio. The mixed solution may contain a curing accelerator, an antioxidant, a leveling agent, a flow modifier, a catalyst, a crosslinking reaction accelerator, a filler, or the like.

Examples of the curing accelerator include tertiary amines, imidazole derivatives, metal salt compounds of carboxylic acids, quaternary ammonium salts, and quaternary phosphonium salts.

Examples of the antioxidants include phenolic antioxidants, sulfur antioxidants, and phosphite antioxidants.

The mixed solution can be disposed in a layer form on the substrate 1 by a known printing method such as offset printing, gravure printing or silk screen printing, or by a known coating method such as roll coating, knife edge coating or gravure coating. After the mixed solution is disposed on the substrate 1, the mixed solution may be heated to, for example, 50°C to 200°C to form the undercoat layer 9.

The thickness of the undercoat layer 9 is not specifically limited, and may be, for example, 0.005 $\mu$m to 5 $\mu$m. The thickness of the undercoat layer 9 may be appropriately determined according to the application and required characteristics of the laminate 30. The thickness of the undercoat layer 9 is preferably 0.01 $\mu$m to 1 $\mu$m, more preferably 0.01 $\mu$m to 0.5 $\mu$m, and even more preferably 0.01 $\mu$m to 0.1 $\mu$m. When the thickness of the undercoat layer 9 is 0.01 $\mu$m or greater, sufficient adhesion strength is achieved between the substrate 1 and the barrier layer 8, improving the oxygen barrier properties of the gas barrier film 10. When the thickness of the undercoat layer 9 is 1 $\mu$m or less, a uniform coating surface of the undercoat layer 9 can be easily formed, suppressing the drying load of the undercoat layer 9 and the manufacturing cost.

(3) Barrier Layer

The barrier layer 8 may include either or both of the inorganic layer 7 and the gas barrier coat 2.

When the barrier layer 8 includes both the inorganic layer 7 and the gas barrier coat 2, the inorganic layer 7 and the gas barrier coat 2 may be laminated in this order on the first surface 1a of the substrate 1 as shown in Fig. 1.

(Inorganic Layer)

Examples of inorganic substances constituting the inorganic layer 7 include inorganic oxides such as aluminum oxide, silicon oxide, magnesium oxide, titanium oxide, tin oxide, zinc oxide and indium oxide, or metals such as aluminum and stainless steel. In particular, inorganic oxides are preferred as the inorganic substance. In this case, the laminate 30 is more excellent in transparency, bending resistance and stretch resistance compared to the case where the inorganic layer 7 is a metal foil or a metal vapor deposition film. In particular, among the inorganic substances, aluminum oxide and silicon oxide are excellent in productivity, and can suppress deterioration of oxygen barrier properties and water vapor barrier properties even after undergoing heating or moist heat treatment. The inorganic layer 7 may be formed of only one type of inorganic substance, or may be formed of two or more types of inorganic substances appropriately selected.

The thickness of the inorganic layer 7 may be 5 nm or greater. When the thickness of the inorganic layer 7 is 5 nm or greater, the gas barrier film 10 has excellent oxygen barrier properties and water vapor barrier properties.

The thickness of the inorganic layer 7 may be 10 nm or greater, 15 nm or greater, or 20 nm or greater.

The thickness of the inorganic layer 7 may be 200 nm or less. When the thickness of the inorganic layer 7 is 200 nm or less, the manufacturing cost of the gas barrier film 10 can be reduced. In addition, even after the gas barrier film 10 is subjected to an external force such as bending or pulling, cracking is less likely to occur in the inorganic layer 7, and the gas barrier film 10 can suppress deterioration of oxygen barrier properties and water vapor barrier properties.

The thickness of the inorganic layer 7 may be 150 nm or less, 100 nm or less, 50 nm or less, or 30 nm or less.

The thickness of the inorganic layer 7 may be 10 nm to 150 nm, 10 nm to 50 nm, or 10 nm to 30 nm.

The inorganic layer 7 can be formed by, for example, a known film-formation method such as vacuum deposition, sputtering, ion plating, plasma-enhanced chemical vapor deposition (CVD), or the like.

(Gas Barrier Coat)

The gas barrier coat 2 is a known coat formed by wet coating.

The gas barrier coat 2 is obtained by forming a coating film made of a coating agent on the substrate 1 or the inorganic layer 7 by wet coating, and drying the coating film. In this specification, the "coating film" refers to a wet film, and the "coat" refers to a dry film.

The gas barrier coat 2 is preferably a coat (hereinafter, also referred to as an "organic-inorganic composite coat") obtained using a composition containing at least one metal alkoxide compound selected from the group consisting of a metal alkoxide, a hydrolysate of a metal alkoxide, a reaction product of a metal alkoxide and a reaction product of a hydrolysate of a metal alkoxide, and a water-soluble polymer. In this case, the gas barrier film 10 has further improved oxygen barrier properties and further improved water vapor barrier properties.

Examples of the metal alkoxide contained in the composition include those represented by the general formula M(OR)n, such as tetraethoxysilane [Si(OC2H5)4] and triisopropoxy aluminum [Al(OC3H7)3]. The composition may contain only one of these, or may contain two or more of these in an appropriate combination.

The reaction product of a metal alkoxide refers to a product (such as a dimer or trimer) obtained by reacting metal alkoxides with each other. The reaction product of a hydrolysate of a metal alkoxide refers to a product obtained by reacting a metal alkoxide with a hydrolysate of a metal alkoxide, or a product obtained by reacting hydrolysates of metal alkoxides with each other.

The total content of the metal alkoxide compounds in the composition may be, for example, 40 mass% to 70 mass% relative to the total amount of the composition (100 mass%). From the perspective of further improving the oxygen barrier properties of the gas barrier film 10, the lower limit of the total content may be 50 mass%, and the upper limit of the total content may be 65 mass%.

The water-soluble polymer contained in the composition is not specifically limited, and examples thereof include various polymers such as polymers made of polysaccharides such as starch, methyl cellulose or carboxymethyl cellulose, polyvinyl alcohol polymers, and acrylic polyol polymers. From the perspective of further improving the oxygen gas barrier properties of the gas barrier film 10, the composition preferably contains a polyvinyl alcohol polymer.

The number-average molecular weight of the water-soluble polymer may be, for example, 40,000 to 180,000.

The polyvinyl alcohol water-soluble polymer can be obtained by, for example, saponification (including partial saponification) of polyvinyl acetate. The water-soluble polymer may be a water-soluble polymer in which several tens of percent of acetic acid groups remain or may be a water-soluble polymer in which only several percent of acetic acid groups remain.

The content of the water-soluble polymer in the composition may be, for example, 15 mass% to 50 mass%, and is preferably 20 mass% to 45 mass%. When the content of the water-soluble polymer is 20 mass% to 45 mass%, the oxygen permeability of the organic-inorganic composite film can be further reduced, and the gas barrier film 10 has further improved oxygen barrier properties.

The composition preferably further contains at least one silane coupling agent-based compound selected from the group consisting of a silane coupling agent, a hydrolysate of a silane coupling agent, a reaction product of a silane coupling agent, and a reaction product of a hydrolysate of a silane coupling agent. In this case, the gas barrier film 10 has further improved oxygen barrier properties.

The silane coupling agent contained in the composition may be a silane coupling agent having an organic functional group. Examples of the silane coupling agent include ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyl dimethoxysilane. The composition may contain only one of these, or may contain two or more of these in an appropriate combination.

The reaction product of a silane coupling agent refers to a product (such as a dimer or trimer) obtained by reacting silane coupling agents with each other. The reaction product of a hydrolysate of a silane coupling agent refers to a product obtained by reacting a silane coupling agent with a hydrolysate of a silane coupling agent, or a product obtained by reacting hydrolysates of silane coupling agents with each other.

The silane coupling agent-based compound may preferably be one having an epoxy group as an organic functional group. Examples of the silane coupling agent having an epoxy group include γ-glycidoxypropyltrimethoxysilane and β-(3,4-epoxycyclohexyl) ethyltrimethoxysilane. The silane coupling agent having an epoxy group may have an organic functional group other than the epoxy group, such as a vinyl group, an amino group, a methacrylic group or a ureyl group.

Since an organic functional group of the silane coupling agent-based compound interacts with a hydroxyl group of a water-soluble polymer, the oxygen barrier properties of the gas barrier coat 2 improves, and the gas barrier film 10 has further improved oxygen barrier properties. Further, since the silane coupling agent-based compound having an organic functional group has further improved adhesion to the substrate 1 or the inorganic layer 7, the gas barrier film 10 has further improved durability. In particular, the interaction between the epoxy group of the silane coupling agent-based compound and the hydroxyl group of the polyvinyl alcohol allows the gas barrier coat 2 and the gas barrier film 10 to have further improved oxygen barrier properties and adhesion.

The total content of the silane coupling agent-based compounds in the composition may be, for example, 1 mass% to 15 mass%. The total content of the silane coupling agent-based compounds is preferably 2 mass% to 12 mass%. In this case, the oxygen permeability of the organic-inorganic composite coat can be further reduced, and the gas barrier film 10 has further improved oxygen barrier properties.

The organic-inorganic composite coat may contain a crystalline inorganic lamellar compound having a lamellar structure. Examples of the inorganic lamellar compound include clay minerals such as kaolinite, smectite and mica. These can be used singly or in appropriate combination of two or more. The average particle size of the inorganic lamellar compound may be, for example, 0.1 μm to 10 μm. The average aspect ratio of the inorganic lamellar compound may be, for example, 50 to 5,000.

The inorganic lamellar compound may preferably be a smectite group clay mineral since a water-soluble polymer can enter between layers of the lamellar structure (intercalation), making it possible to form a coat having excellent oxygen barrier properties and adhesion. Specific examples of the smectite group clay minerals include montmorillonite, hectorite, saponite and water-swellable synthetic mica.

Another preferred example of the gas barrier coat 2 is a coat containing a polyvalent metal salt of a polycarboxylic acid polymer (A), which is a reaction product between a carboxy group of the polycarboxylic acid polymer (A) and a polyvalent metal compound (B) (polycarboxylic acid polyvalent metal salt layer). In this case, the polycarboxylic acid polyvalent metal salt layer may be a polycarboxylic acid polyvalent metal salt layer formed by applying a coating agent obtained by mixing a polycarboxylic acid polymer (A) and a polyvalent metal compound (B) and drying the coating agent by heating, or may be a polycarboxylic acid polyvalent metal salt layer formed by applying a coating agent mainly composed of a polycarboxylic acid polymer (A) and drying the coating agent to form a coat A and then applying a coating agent, on the coat A, mainly composed of a polyvalent metal compound (B) and drying the coating agent to form a coat B to cause a crosslinking reaction between the A/B layers (i.e., between the coat A and coat B).

When the gas barrier coat 2 is a polycarboxylic acid polyvalent metal salt layer, the gas barrier film 10 has further improved oxygen barrier properties and further improved water vapor barrier properties.

(Polycarboxylic Acid Polymer (A))

The polycarboxylic acid polymer (A) is a polymer having two or more carboxy groups in a molecule. Examples of the polycarboxylic acid polymer (A) include an ethylenically unsaturated carboxylic acid polymer, a copolymer of ethylenically unsaturated carboxylic acid and another ethylenically unsaturated monomer, and acidic polysaccharides having a carboxyl group in a molecule.

Examples of the ethylenically unsaturated carboxylic acid include acrylic acid, methacrylic acid, itaconic acid, maleic acid, fumaric acid and crotonic acid.

Examples of the ethylenically unsaturated monomer copolymerizable with the ethylenically unsaturated carboxylic acid include saturated carboxylic acid vinyl esters such as ethylene, propylene and vinyl acetate, alkyl acrylates, alkyl methacrylates, alkyl itaconates, vinyl chloride, vinylidene chloride, styrene, acryl amide and acrylonitrile.

Examples of the acidic polysaccharides having a carboxyl group in a molecule include alginic acid, carboxymethyl cellulose and pectin. These polycarboxylic acid polymers (A) may be used alone or as a mixture of two or more.

Of the above materials, from the viewpoint of gas barrier properties of the resulting gas barrier film 10, the polycarboxylic acid polymer (A) is preferably a polymer containing a constituent unit derived from at least one polymerizable monomer (ethylenically unsaturated carboxylic acid) selected from the group consisting of acrylic acid, maleic acid, methacrylic acid, itaconic acid, fumaric acid and crotonic acid, and particularly preferably a polymer containing a constituent unit derived from at least one polymerizable monomer (ethylenically unsaturated carboxylic acid) selected from the group consisting of acrylic acid, maleic acid, methacrylic acid and itaconic acid. In the polymer, the proportion of the constituent unit derived from at least one polymerizable monomer (ethylenically unsaturated carboxylic acid) selected from the group consisting of acrylic acid, maleic acid, methacrylic acid and itaconic acid is preferably 80 mol% or greater, and more preferably 90 mol% or greater (where the total constituent units constituting the polymer is 100 mol%).

The polycarboxylic acid polymer (A) may be a homopolymer or a copolymer. When the polycarboxylic acid polymer (A) is a copolymer containing an additional constituent unit other than the above constituent units, the additional constituent unit may be, for example, a constituent unit derived from the above-described ethylenically unsaturated monomer copolymerizable with the ethylenically unsaturated carboxylic acid.

The polycarboxylic acid polymer (A) preferably has a number-average molecular weight in the range of 2,000 to 10,000,000, and more preferably in the range of 5,000 to 1,000,000. When the number-average molecular weight is 2,000 or greater, the resulting gas barrier film 10 can achieve further improved water resistance, thereby suppressing deterioration of the gas barrier properties and transparency due to moisture. Furthermore, whitening does not occur in the gas barrier film 10. On the other hand, when the number-average molecular weight is 10,000,000 or less, the viscosity of the coating agent during formation of the gas barrier coat is lowered, thereby further improving the coatability of the coating agent.

The number-average molecular weight is obtained by gel permeation chromatography (GPC) and expressed in terms of polystyrene.

When the coat B is formed after the coat A is formed by applying and drying a coating agent mainly composed of the polycarboxylic acid polymer (A), some of the carboxy groups of the polycarboxylic acid polymer (A) may be neutralized in advance with a basic compound. By neutralizing some of the carboxy groups of the polycarboxylic acid polymer (A) in advance, water resistance and heat resistance of the coat A can be further improved.

The basic compound is preferably at least one basic compound selected from the group consisting of a polyvalent metal compound, a monovalent metal compound and ammonia.

Examples of the polyvalent metal compound that can be used include compounds exemplified in the following description of the polyvalent metal compound (B). Examples of the monovalent metal compound include sodium hydroxide and potassium hydroxide.

Various additives can be added to the coating agent mainly composed of the polycarboxylic acid polymer (A) as long as the barrier properties of the gas barrier coat 2 are not impaired. Examples of the additives include crosslinking agents, curing agents, leveling agents, defoaming agents, anti-blocking agents, antistatic agents, dispersants, surfactants, softeners, stabilizers, film-forming agents and thickeners.

The solvent used in the coating agent mainly composed of the polycarboxylic acid polymer (A) is preferably an aqueous medium. Examples of the aqueous medium include water, water-soluble organic solvents, hydrophilic organic solvents, and a mixture thereof. The aqueous medium is usually water or a medium containing water as the main component.

The water content in the aqueous medium is preferably 70 mass% or greater, and more preferably 80 mass% or greater. Examples of the water-soluble organic solvent or hydrophilic organic solvent include alcohols such as methanol, ethanol and isopropanol, ketones such as acetone and methyl ethyl ketone, ethers such as tetrahydrofuran, cellosolves, carbitols, and nitriles such as acetonitrile.

(Polyvalent Metal Compound (B))

The polyvalent metal compound (B) is not specifically limited as long as it is a compound that reacts with the carboxyl group of the polycarboxylic acid polymer (A) to form a polyvalent metal salt of a polycarboxylic acid. Examples of the polyvalent metal compound (B) include zinc oxide particles, magnesium oxide particles, magnesium methoxide, copper oxide, and calcium carbonate. These can be used singly or in combination of two or more. The polyvalent metal compound (B) is preferably zinc oxide from the viewpoint of the oxygen barrier properties of the gas barrier coat 2.

Zinc oxide is an inorganic material capable of absorbing ultraviolet light, and the average particle size of the zinc oxide particles is not specifically limited, but is preferably 5 $\mu$m or less, more preferably 1 $\mu$m or less, and particularly preferably 0.1 $\mu$m or less from the viewpoint of the gas barrier properties and transparency of the gas barrier coat 2 and coating suitability during formation of the gas barrier coat 2.

When the coat B is formed by applying and drying a coating agent mainly composed of the polyvalent metal compound (B), the coating agent may contain various additives in addition to the zinc oxide particles, as necessary, to such an extent that the effects of the present disclosure are not impaired. Examples of the additives include resins that are soluble or dispersible in a solvent used for the coating agent, and dispersants, surfactants, softeners, stabilizers, film-forming agents and thickeners that are soluble or dispersible in the solvent.

Among the above materials, the coating agent preferably contains a resin that is soluble or dispersible in the solvent used for the coating agent. This improves the coatability and film-formation properties of the coating agent. Examples of such a resin include an alkyd resin, a melamine resin, an acrylic resin, a urethane resin, a polyester resin, a phenolic resin, an amino resin, a fluororesin, an epoxy resin and an isocyanate resin.

Furthermore, the coating agent preferably contains a dispersant that is soluble or dispersible in the solvent used for the coating agent. This improves the dispersibility of the polyvalent metal compound (B).

The dispersant may be an anionic surfactant or a nonionic surfactant. Examples of the surfactant include various surfactants such as (poly)carboxylic acid salt, alkyl sulfate ester salt, alkylbenzene sulfonic acid salt, alkylnaphthalene sulfonic acid salt, alkylsulfosuccinic acid salt, alkyl diphenyl ether disulfonic acid salt, alkyl phosphate salt, aromatic phosphate ester, polyoxyethylene alkyl ether, polyoxyethylene alkyl phenol ether, polyoxyethylene alkyl ester, alkylaryl sulfate ester salt, polyoxyethylene alkyl phosphate ester, sorbitan alkyl ester, glycerol fatty acid ester, sorbitan fatty acid ester, sucrose fatty acid ester, polyethylene glycol fatty acid ester, polyoxyethylene sorbitan alkyl ester, polyoxyethylene alkylaryl ether, polyoxyethylene derivative, polyoxyethylene sorbitol fatty acid ester, polyoxy fatty acid ester, and polyoxyethylene alkylamine. These surfactants may be used alone or as a mixture of two or more.

When the coating agent mainly composed of the polyvalent metal compound (B) contains an additive, the mass ratio of the polyvalent metal compound (B) to the additive (polyvalent metal compound (B) : additive) is preferably in the range of 30:70 to 99: 1, and preferably in the range of 50:50 to 98:2.

Examples of the solvent used for the coating agent mainly composed of the polyvalent metal compound (B) include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate and butyl acetate. These solvents may be used alone or as a mixture of two or more.

Of these solvents, from the viewpoint of coatability of the coating agent, the solvent is preferably methyl alcohol, ethyl alcohol, isopropyl alcohol, toluene, ethyl acetate, methyl ethyl ketone or water. From the viewpoint of manufacturability of the gas barrier coat 2, the solvent is preferably methyl alcohol, ethyl alcohol, isopropyl alcohol or water.

When a polycarboxylic acid polyvalent metal salt layer is formed by applying and drying a coating agent obtained by mixing the polycarboxylic acid polymer (A) and the polyvalent metal compound (B), the coating agent is prepared by mixing the polycarboxylic acid polymer (A), the polyvalent metal compound (B), a resin or dispersant that is soluble or dispersible in the solvent, and an additive if necessary, in water or alcohol as a solvent, and then the coating agent is applied and dried by a known coating method to form a polycarboxylic acid polyvalent metal salt layer.

Examples of the coating method include casting, dipping, roll coating, gravure coating, screen printing, reverse coating, spray coating, kit coating, die coating, metering bar coating, combined chamber and doctor coating, curtain coating, and the like.

The thickness of the gas barrier coat 2 may be set according to the required oxygen barrier properties, and may be, for example, 0.05 $\mu$m to 5.0 $\mu$m. The thickness of the gas barrier coat 2 is preferably 0.05 $\mu$m to 1.0 $\mu$m, and more preferably 0.1 $\mu$m to 0.5 $\mu$m. When the thickness of the gas barrier coat 2 is 0.05 $\mu$m or greater, sufficient oxygen barrier properties can be easily achieved in the gas barrier film 10. When the thickness of the gas barrier coat 2 is 1.0 $\mu$m or less, a uniform coating surface can be easily formed during formation of the gas barrier coat 2, suppressing the drying load of the gas barrier coat 2 and the manufacturing cost of the gas barrier film 10.

(4) Adhesive Layer

The adhesive layer 6 can be formed by, for example, using a known adhesive for dry lamination. Any adhesive for dry lamination can be used without particular limitation, and specific examples thereof include two-component curing type ester adhesives, ether adhesives and urethane adhesives.

The adhesive layer 6 may be formed using a gas barrier adhesive that exhibits gas barrier properties after curing. Using a gas barrier adhesive imparts gas barrier properties to the adhesive layer 6, making it possible to improve the gas barrier properties of the laminate 30.

The oxygen permeability of the gas barrier adhesive is preferably 150 cc/m$^2$·day·atm or less, more preferably 100 cc/m$^2$·day·atm or less, even more preferably 80 cc/m$^2$·day·atm or less, and particularly preferably 50 cc/m$^2$·day·atm or less. When the oxygen permeability is within the above range, the gas barrier properties of the laminate 30 can be more sufficiently improved, and even when slight cracking or the like occurs in the inorganic layer 7 or the gas barrier coat 2, the gas barrier adhesive can enter the gap, thereby suppressing deterioration of the gas barrier properties of the laminate 30.

Examples of the gas barrier adhesive include epoxy adhesives and polyester-polyurethane adhesives. Specific examples of the gas barrier adhesive include "MAXIVE" manufactured by Mitsubishi Gas Chemical Company, Inc. and "Paslim" manufactured by DIC Corporation.

When the adhesive layer 6 is formed using a gas barrier adhesive, the thickness of the adhesive layer 6 is preferably 50 times or more the thickness of the inorganic layer 7. When the thickness of the adhesive layer 6 is within the above range, occurrence of cracking in the inorganic layer 7 can be more sufficiently suppressed, and the gas barrier properties of the laminate 30 can be further improved. Further, when the thickness of the adhesive layer 6 is within the above range, cushioning properties that mitigate external impacts can be imparted to the adhesive layer 6, and the inorganic layer 7 can be prevented from cracking due to an impact, so that deterioration of the water vapor barrier properties of the laminate 30 can be suppressed even when the laminate 30 is subjected to impact. From the perspective of maintaining the flexibility of the laminate 30, processability and the cost, the thickness of the adhesive layer 6 is preferably 300 times or less the thickness of the inorganic layer 7.

Specifically, the thickness of the adhesive layer 6 may be, for example, 0.1 $\mu$m to 20 $\mu$m, preferably 0.5 $\mu$m to 10 $\mu$m, and more preferably 1 $\mu$m to 5 $\mu$m.

The adhesive layer 6 may be a layer obtained using a solvent-free adhesive, which is an adhesive containing no solvent. In this case, since the solvent does not volatilize during formation of the adhesive layer 6, environmental load of the laminate 30 can be reduced. Examples of the solvent-free adhesive include two-component curing type urethane adhesives and one-component curing type urethane adhesives. The solvent-free adhesive preferably contains a two-component curing type urethane adhesive. In this case, since the adhesion between the adhesive layer 6 and the barrier layer 8 or the heat seal layer 4 is further improved, the laminate 30 has sufficient durability.

When the adhesive layer 6 is formed using a solvent-free adhesive, the thickness of the adhesive layer 6 is preferably 50 times or more the thickness of the inorganic layer 7. When the thickness of the adhesive layer 6 is within the above range, occurrence of cracking in the inorganic layer 7 can be more sufficiently suppressed. Further, when the thickness of the adhesive layer 6 is within the above range, cushioning properties that mitigate external impacts can be imparted to the adhesive layer 6, and the inorganic layer 7 can be prevented from cracking due to an impact, so that deterioration of the water vapor barrier properties of the laminate 30 can be suppressed even when the laminate 30 is subjected to impact. From the perspective of maintaining the flexibility of the laminate 30, processability and the cost, the thickness of the adhesive layer 6 is preferably 300 times or less the thickness of the inorganic layer 7.

Specifically, the thickness of the adhesive layer 6 may be, for example, 0.1 $\mu$m to 20 $\mu$m, preferably 0.5 $\mu$m to 10 $\mu$m, and more preferably 1 $\mu$m to 5 $\mu$m.

The adhesive layer 6 can be formed by applying an adhesive, for example, by bar coating, dipping, roll coating, gravure coating, reverse coating, air knife coating, comma coating, die coating, screen printing, spray coating, gravure offset, or the like. The temperature for drying the coating film of the adhesive may be, for example, 30°C to 200°C, and preferably 50°C to 180°C. The temperature for curing the coating film may be, for example, from room temperature to 70°C, and preferably 30°C to 60°C. Drying and curing temperatures within the above ranges can further suppress occurrence of cracking in the inorganic layer 7 and the adhesive layer 6, ensuring excellent gas barrier properties of the gas barrier film 10.

The adhesive layer 6 and the inorganic layer 7 may be in direct contact with each other, or another layer such as the gas barrier coat 2 may be provided between the adhesive layer 6 and the inorganic layer 7. From the perspective of suppressing occurrence of cracking in the inorganic layer 7 and the adhesive layer 6, it is preferred that the adhesive layer 6 and the inorganic layer 7 are in direct contact with each other.

(5) Heat Seal Layer

The heat seal layer 4 functions as a sealant when a packaging bag or the like is produced using the laminate 30. The heat seal layer 4 may be a layer containing a thermoplastic resin such as polyolefin, and for example, a polyolefin film can be used as the heat seal layer 4.

Due to the heat seal layer 4 being included in the laminate 30, the laminate 30 can be sealed by heat sealing (for example, a package or a lid).

Examples of the polyolefin used for the heat seal layer 4 include polyethylene such as low-density polyethylene resin (LDPE), medium-density polyethylene resin (MDPE), linear low-density polyethylene resin (LLDPE), ethylene-vinyl acetate copolymer (EVA), ethylene-$\alpha$-olefin copolymer and ethylene-(meth)acrylic acid copolymer, polypropylene such as homopolypropylene resin (PP), propylene-ethylene random copolymer, propylene-ethylene block copolymer and propylene-$\alpha$-olefin copolymer, and polybutene. These polyolefins can be used singly or in combination of two or more. These polyolefins can be appropriately selected depending on the temperature conditions such as the application and the boiling treatment.

The heat seal layer 4 preferably contains polyethylene as the polyolefin. In this case, since both the substrate 1 and the heat seal layer 4 contain polyethylene, the laminate 30 has recyclability.

The heat seal layer 4 may contain various additives, if necessary, such as a flame retardant, a slip agent, an anti-blocking agent, an antioxidant, a photostabilizer, and a tackifier.

The thickness of the heat seal layer 4 can be appropriately set in consideration of the shape of the packaging bag to be produced, the mass of the contents to be contained, and the like, and may be, for example, 30 $\mu$m to 150 $\mu$m.

When the heat seal layer 4 is a polyolefin film, the heat seal layer 4 can be bonded to the gas barrier film 10 by either a dry lamination method using an adhesive such as a one-component curable type or two-component curable type urethane adhesive or a non-solvent dry lamination method using a solvent-free adhesive.

Further, the heat seal layer 4 can also be formed by an extrusion lamination method in which a thermoplastic resin such as polyolefin is heated and melted, extruded in a curtain shape, and bonded. In this case, the adhesive layer 6 may be omitted.

(6) Other Layers

The laminate 30 may further include an adhesion-enhancing layer, a print layer, a protective layer, a light-shielding layer, an oxygen-absorbing layer, an adhesive layer or other functional layers as necessary.

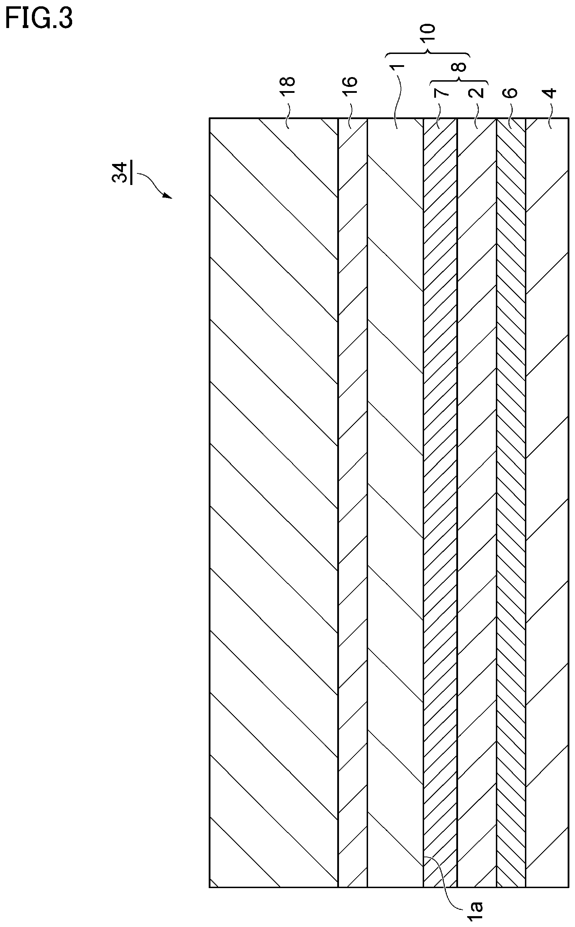

The laminate 30 shown in Fig. 1 includes the barrier layer 8 on the first surface 1a side of the substrate 1 and no layer on the second surface side, which is a surface of the substrate 1 opposite the first surface 1a, but the laminate of the present disclosure may further include a second adhesive layer 16 and a surface substrate layer 18 in this order on the second surface of the substrate 1, as in a laminate 34 shown in Fig. 3. By providing these layers, the substrate 1 is reinforced by the surface substrate layer 18 via the second adhesive layer 16, so that the laminate 34 has further improved strength. The following description will be given of the second adhesive layer 16 and the surface substrate layer 18.

The second adhesive layer 16 is a layer that bonds the substrate 1 and the surface substrate layer 18 to each other. The adhesive layer 16 may be the same or different from the adhesive layer 6 in terms of material, thickness, shape, and the like. The second adhesive layer 16 can be formed by the same method as that for the adhesive layer 6.

The surface substrate layer 18 is a layer that imparts strength to the laminate 30. The surface substrate layer 18 may be the same or different from the substrate 1 in terms of material, thickness, shape, layer configuration, and the like. The surface substrate layer 18 can be formed by the same method as that for the substrate 1.

[Method of Producing Laminate]

(Method of Producing Laminate 30)

The laminate 30 can be produced by forming the inorganic layer 7 or the gas barrier coat 2 on the first surface 1a side of the substrate 1, or by forming the inorganic layer 7 and the gas barrier coat 2 in this order to obtain the gas barrier film 10, and then laminating the heat seal layer 4 onto the gas barrier film 10 via the adhesive layer 6.

The method of producing the laminate 30 according to the present disclosure may include the steps of, for example, selecting a substrate 1, forming an inorganic layer, forming a gas barrier coat, and laminating a heat seal layer.

When the method of producing the laminate 30 of the present disclosure includes a step of selecting a substrate 1, it is possible to select a substrate 1 having the degree of crystallinity (ratio of the crystalline peak area to the total peak area) measured by a parallel beam method of X-ray diffraction in the diffraction angle range of 10° to 30° of 35.0% or less, and the ratio of the crystalline peak area of the (200) plane of polyethylene to the total peak area of 2.0% or less. Therefore, when the method of producing the laminate 30 includes a step of selecting a substrate 1, it is possible to produce the laminate 30 which has excellent water vapor barrier properties, can suppress deterioration of the water vapor barrier properties even after undergoing heat sterilization treatment, and has high adhesion between the gas barrier film 10 and the heat seal layer 4.

An example step of selecting a substrate 1 includes a step of selecting a substrate 1 having the degree of crystallinity (ratio of the crystalline peak area to the total peak area) measured by a parallel beam method of X-ray diffraction in the diffraction angle range of 10° to 30° of 35.0% or less, and the ratio R of the crystalline peak area of the (200) plane of polyethylene to the total peak area of 2.0% or less. The degree of crystallinity of the substrate 1 is measured by the above-mentioned method for measuring degree of crystallinity.

An example step of forming an inorganic layer includes a step of forming an inorganic layer 7 on the first surface 1a side of the substrate 1 by vacuum deposition, sputtering, ion plating, plasma-enhanced chemical vapor deposition (CVD), or the like.

An example step of forming a gas barrier coat includes a step of forming a coating film by applying a coating agent by a wet coating method, and drying the coating film (removing the solvent) to form a gas barrier coat 2.

The coating agent can be applied by a known wet coating method. Examples of the wet coating method include roll coating, gravure coating, reverse coating, die coating, screen printing, spray coating, and the like.

The coating film made of the coating agent can be dried by a known drying method, such as hot-air drying, heat roll drying or infrared radiation. The drying temperature of the coating film may preferably be, for example, 50°C to 200°C. The drying time varies depending on the thickness of the coating film, the drying temperature, and the like, but may preferably be, for example, 1 second to 5 minutes.

The gas barrier coat 2 may be formed by a single coating and drying process, or by a plurality of coating and drying processes using the same coating agent or different coating agents.

An example step of laminating a heat seal layer includes a step of laminating a heat seal layer 4 onto the barrier layer 8 using an adhesive by a dry lamination method.

An example method for laminating a heat seal layer 4 using an adhesive includes known dry lamination and extrusion lamination methods.

(Method of Producing Laminate 32)

The laminate 32 can be produced by forming the undercoat layer 9 on the first surface 1a of the substrate 1, and then forming the inorganic layer 7 or the gas barrier coat 2 or forming the inorganic layer 7 and the gas barrier coat 2 in this order to obtain the gas barrier film 10, and then laminating the heat seal layer 4 onto the gas barrier film 10 via the adhesive layer 6.

The method of producing the laminate 32 according to the present disclosure may include the steps of, for example, selecting a substrate 1, forming an undercoat layer, forming an inorganic layer, forming a gas barrier coat, and laminating a heat seal layer, and is the same as the method of producing the laminate 30 except for the step of forming an undercoat layer.

An example step of forming an undercoat layer includes a step of applying a composition for forming an undercoat layer onto the first surface 1a of the substrate 1, and drying the composition to form an undercoat layer 9.

The composition for forming an undercoat layer can be applied by the same method as the coating method of the coating agent described above. The composition for forming an undercoat layer can be dried by the same method as the method for drying the coating film made of the coating agent described above.

(Method of Producing Laminate 34)

The laminate 34 can be produced by laminating the second adhesive layer 16 and the surface substrate layer 18 in this order on the second surface of the substrate 1 of the laminate 30.

The method of producing the laminate 34 according to the present disclosure may include the steps of, for example, selecting a substrate 1, forming an undercoat layer, forming an inorganic layer, forming a gas barrier coat, laminating a heat seal layer, and laminating a surface substrate layer, and is the same as the method of producing the laminate 30 except for the step of forming an surface substrate layer.

An example step of laminating a surface substrate layer includes a step of laminating a surface substrate layer 18 onto the second surface of the substrate 1 using an adhesive by a known dry lamination method.

[Package]

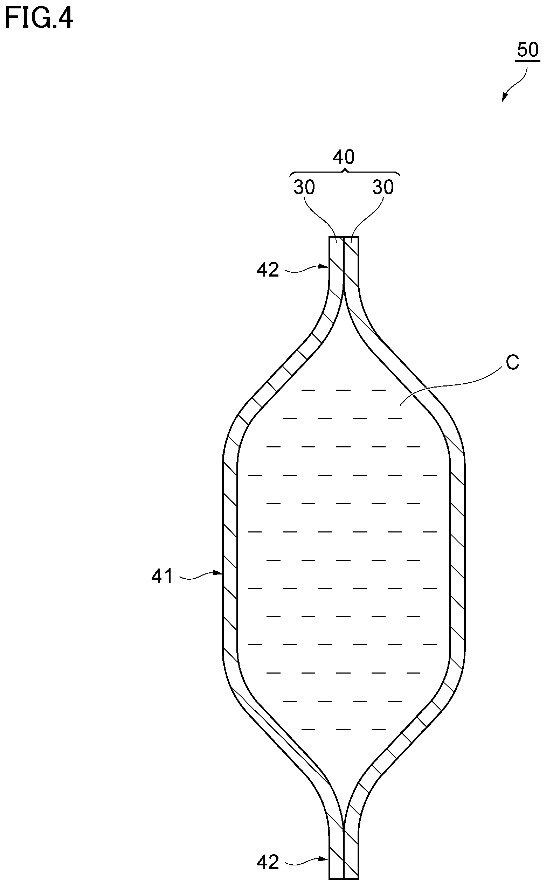

Next, an embodiment of the package of the present disclosure will be described with reference to Fig. 4. Fig. 4 is a cross-sectional view schematically illustrating an embodiment of a package according to the present disclosure.

As shown in Fig. 4, a package 50 includes a packaging bag 40 and contents C contained in the packaging bag 40. The packaging bag 40 is formed using the laminate 30, and the heat seal layer 4 forms the inner surface of the packaging bag 40. Specifically, the packaging bag 40 is formed by overlapping two laminates 30 with the heat seal layers 4 facing each other, and heat-sealing the peripheral edges of the heat seal layers 4 together. Therefore, the packaging bag 40 includes a main body 41 in which the contents C are contained, and a seal portion 42 surrounding the main body 41.

Since the packaging bag 40 has excellent water vapor barrier properties, and can suppress deterioration of the water vapor barrier properties even after undergoing heat sterilization treatment, the package 50 can prevent the quality of the contents C contained in the packaging bag 40 from deteriorating due to the contents C being exposure to water vapor. Further, since the gas barrier film 10 has high adhesion to the heat seal layer 4, the package 50 has sufficient durability.

(Contents)

The contents C are not specifically limited, and examples of the contents C include foods, pharmaceuticals, and the like. When the contents C are foods, the package 50 can suppress deterioration of the water vapor barrier properties even after undergoing heat sterilization treatment.

(Packaging Bag)

In the present embodiment, the packaging bag 40 includes the main body 41 in which the contents C are contained, and the seal portion 42 surrounding four peripheral edges of the main body 41. That is, the packaging bag 40 is configured as a four-side sealed pouch.

The two laminates 30 constituting the packaging bag 40 may be the same or different from each other. That is, the layers constituting the laminate 30 may be the same or different from each other in terms of material, thickness, shape, and the like.

The packaging bag 40 is not specifically limited to a four-side sealed pouch, and can be appropriately selected according to the application of the packaging bag. The packaging bag 40 may be, for example, a three-side sealed pouch, a pillow bag, a standing pouch, a gusset bag, a spouted bag, or the like.

The packaging bag 40 may be composed of three or more laminates 30. In this case, the plurality of laminates 30 constituting the packaging bag 40 may be made of materials different from each other, and may be different from each other in thickness, shape, and the like.

Examples of the heat sterilization treatment include moist heat treatment such as retort treatment and boiling treatment.

In the present embodiment, the laminate 30 is used as the laminate constituting the package and the packaging bag, but the laminate 32 or the laminate 34 may be used instead of the laminate 30.

Examples

The present disclosure will be further described in detail by using examples and comparative examples. It should be noted that the present disclosure is not limited to the following examples.

Materials used in the examples and comparative examples are as follows.

<Materials Used>

(Resin Films $\alpha$1 to $\alpha$6)

· Resin film $\alpha$1: Non-oriented polyethylene film (thickness 25 $\mu$m, density 0.952 g/cm$^3$), corona treated on one side.

· Resin film $\alpha$2: Non-oriented polyethylene film (thickness 25 $\mu$m, density 0.950 g/cm$^3$), corona treated on one side.

· Resin film $\alpha$3: Non-oriented polyethylene film (thickness 40 $\mu$m, density 0.949 g/cm$^3$), corona treated on one side.

· Resin film $\alpha$4: Non-oriented polyethylene film (thickness 30 $\mu$m, density 0.947 g/cm$^3$), corona treated on one side.

· Resin film $\alpha$5: Uniaxially oriented polyethylene film (thickness 25 $\mu$m, density 0.950 g/cm$^3$), corona treated on one side.

· Resin film $\alpha$6: Biaxially oriented polyethylene film (thickness 25 $\mu$m, density 0.95 g/cm$^3$), corona treated on one side.

(Polyethylene)

· Resin A: Density 0.941 g/cm$^3$, MFR 1.3 g/10 min.

· Resin B: Density 0.962 g/cm$^3$, MFR 0.85 g/10 min.

· Resin C: Density 0.971 g/cm$^3$, MFR 1.2 g/10 min.

· Resin D: Density 0.967 g/cm$^3$, MFR 1.2 g/10 min.

· Resin E: Density 0.960 g/cm$^3$, MFR 1.0 g/10 min.

· Resin F: Density 0.963 g/cm$^3$, MFR 1.4 g/10 min.

(Resin Films $\alpha$7 to $\alpha$15)

Resins A to F shown in Table 1 below were loaded into an extruder as resins for forming a surface layer, an intermediate layer and a back layer, and melt-kneaded at 190°C. Then, the polyethylenes were discharged through a die for three layers to form resin films (multilayer polyethylene films) $\alpha$7 to $\alpha$15 by an air-cooled blown film extrusion process. The thicknesses of the resin films $\alpha$7 to $\alpha$15 were all 30 $\mu$m as shown in Table 1. The layer thickness ratio of the surface layer, the intermediate layer and the back layer and the densities of the resin films $\alpha$7 to $\alpha$15 were as shown in Table 1.

[Table 1]

| | Polyethylene | | | Layer thickness ratio | | | Thickness | Resin film density |
|---|---|---|---|---|---|---|---|---|
| | Surface layer | Intermediate layer | Back layer | Surface layer | Intermediate layer | Back layer | μm | g/cm³ |
| Resin film α7 | Resin A | Resin B | Resin A | 1 | 3 | 1 | 30 | 0.954 |
| Resin film α8 | Resin A | Resin B | Resin A | 1 | 2 | 1 | 30 | 0.952 |
| Resin film α9 | Resin A | Resin C | Resin A | 1 | 3 | 1 | 30 | 0.959 |
| Resin film α10 | Resin A | Resin A + Resin C | Resin A | 1 | 3 | 1 | 30 | 0.950 |
| Resin film α11 | Resin A | Resin D | Resin A | 1 | 3 | 1 | 30 | 0.957 |
| Resin film α12 | Resin B | Resin B | Resin B | 1 | 3 | 1 | 30 | 0.962 |
| Resin film α13 | Resin A | Resin E | Resin A | 1 | 3 | 1 | 30 | 0.952 |
| Resin film α14 | Resin A | Resin F | Resin A | 1 | 3 | 1 | 30 | 0.954 |
| Resin film α15 | Resin E | Resin E | Resin E | 1 | 3 | 1 | 30 | 0.960 |

(Mixed Solution for Forming Undercoat Layer)

The following acrylic polyol and isocyanate compound were blended at the solid content mass ratio of 6:4 to obtain a mixture. Then, the mixture was diluted with ethyl acetate to a solid content concentration of 2 mass%. Thus, a mixed solution for forming an undercoat layer was obtained.

· Acrylic polyol: Acrydic CL-1000 (trade name), manufactured by DIC Corporation

· Isocyanate compound: TDI type curing agent Coronate 2030 (trade name), manufactured by Tosoh Corporation

(Mixed Solution for Forming Organic-Inorganic Composite Coat)

An aqueous solution of the following polyvinyl alcohol resin (PVA, Poval PVA-105 (trade name), manufactured by Kuraray Co., Ltd., degree of saponification 98% to 99%, degree of polymerization 500), tetraethoxysilane (TEOS), and γ-glycidoxypropyltrimethoxysilane (GPTMS, KBM-403 (trade name), manufactured by Shin-Etsu Chemical Co., Ltd.) as a silane coupling agent were each hydrolyzed with 0.02 mol/L hydrochloric acid to prepare three aqueous solutions, and the three aqueous solutions were mixed so that the mass ratio of PVA:TEOS:GPTMS before hydrolysis was 40:50:10. Further, the aqueous solution obtained by mixing was diluted with a solvent (isopropyl alcohol) so that the mass ratio of water and isopropyl alcohol in the solvent component was 90:10. Thus, a mixed solution for forming an organic-inorganic composite coat (solid content concentration 5 mass%) was obtained.

(Mixed Solution for Coat A)

20 parts by mass of the following polyacrylic acid aqueous solution was diluted with 58.9 parts by mass of distilled water to obtain a diluted solution. Then, 0.44 parts by mass of the silane coupling agent was added to the diluted solution, and the mixture was stirred to obtain a homogeneous solution. Thus, a mixed solution for coat A containing a polycarboxylic acid polymer as the main component was obtained.

· Polyacrylic acid aqueous solution: Aron A-10H (trade name), manufactured by Toagosei Co., Ltd., number-average molecular weight 200,000, solid content concentration 25 mass%

· Silane coupling agent: Aminopropyltrimethoxysilane (APTMS), manufactured by Aldrich

(Mixed Solution for Coat B)

100 parts by mass of an aqueous dispersion of zinc oxide fine particles and 2 parts by mass of a curing agent were mixed to obtain a mixed solution for coat B containing a polyvalent metal compound as the main component was obtained.

· Aqueous dispersion of zinc oxide fine particles: ZE143 (trade name), manufactured by Sumitomo Osaka Cement Co., Ltd.

· Curing agent: Liofol HAERTER UR 5889-21 (trade name), manufactured by Henkel

<Urethane Adhesive>

100 parts by mass of TAKELAC A525 (trade name, manufactured by Mitsui Chemicals, Inc.) were mixed with 11 parts by mass of TAKENATE A52 (trade name, manufactured by Mitsui Chemicals, Inc.) and 84 parts by mass of ethyl acetate to obtain a urethane adhesive.

(Gas Barrier Adhesive)

23 parts by mass of a solvent obtained by mixing ethyl acetate and methanol at a mass ratio of 1:1 was mixed with 16 parts by mass of MAXIVE C93T (trade name, manufactured by Mitsubishi Gas Chemical Company, Inc.) and 5 parts by mass of MAXIVE M-100 (trade name, manufactured by Mitsubishi Gas Chemical Company, Inc.) to obtain a gas barrier adhesive.

(Solvent-Free Adhesive)

70 parts by mass of LOCTITE (trade name) LIOFOL LA7735 (trade name, manufactured by Henkel Japan Ltd.) and 30 parts by mass of LOCTITE LIOFOL LA6195 (trade name, manufactured by Henkel Japan Ltd.) were mixed to obtain a solvent-free adhesive.

<Preparation of Laminate>

(Example 1)

The mixed solution for forming an undercoat layer was applied onto the corona-treated surface of the resin film $\alpha 1$ using a gravure printer to form a coating film, and the resin film with the coating film was dried by passing it through an oven at 60°C for 10 seconds to form a 0.1 $\mu$m-thick undercoat layer on the resin film $\alpha 1$.
Next, a 30 nm-thick inorganic layer made of silicon oxide was formed on the undercoat layer by using an electron beam heating type vacuum deposition machine. The vapor deposition material used was a mixed material containing two or more of silicon metal, silicon monoxide and silicon dioxide.
Further, the mixed solution for forming an organic-inorganic composite coat (solid content concentration 5 mass%) was applied onto the inorganic layer using a gravure printer to form a coating film, and the coating film was dried by passing it through an oven at 60°C for 10 seconds to form a gas barrier coat formed of a 0.3 $\mu$m-thick organic-inorganic composite coat. Thus, a gas barrier film was obtained.
Finally, a 60 $\mu$m-thick film for a heat seal layer described below was laminated on the gas barrier coat of the gas barrier film via an adhesive by dry lamination using a multicoater (trade name: TM-MC, manufactured by Hirano Tecseed Co., Ltd.), and is aged at 40°C for 3 days. Thus, a laminate according to Example 1 was obtained. The adhesive used was the above urethane adhesive.

· Film for heat seal layer: linear low-density polyethylene (LLDPE) film, TUX MC-S (trade name), manufactured by Mitsui Chemicals Tohcello, Inc.)

(Examples 2, 6, 7, 11 to 16, Comparative Examples 1, 2, 6, 7, 11 to 13)

Laminates according to Examples 2, 6, 7 and 11 to 16 and Comparative Examples 1, 2, 6, 7 and 11 to 13 were obtained in the same manner as in Example 1 except that the resin films and adhesives used shown in Tables 2 to 4 were used.

(Example 3)

A laminate according to Example 3 was obtained in the same manner as in Example 1 except that the undercoat layer was not formed.

(Example 4)

A laminate according to Example 4 was obtained in the same manner as in Example 1 except that a 20 nm-thick inorganic layer made of aluminum oxide was formed as the inorganic layer and a gas barrier coat made of a polyvalent metal salt layer was formed as the gas barrier coat by the following method.

(Formation of Polyvalent Metal Salt Layer)

First, the mixed solution for coat A was applied onto the inorganic layer using a gravure printer to form a coating film, and the coating film was dried by passing it through an oven at 60°C for 10 seconds to form a 0.2 $\mu$m-thick coat A.
Further, the mixed solution for coat B was applied using a gravure printer to form a coating film, and the coating film was dried by passing it through an oven at 60°C for 10 seconds to form a 0.2 $\mu$m-thick coat B. Thus, a gas barrier coat formed of a polycarboxylic acid polyvalent metal salt layer was formed.

(Example 5, Comparative Examples 3, 4 and 8)

Laminates according to Example 5, Comparative Examples 3, 4 and 8 were obtained in the same manner as in Example 4 except that the resin films shown in Table 2 or 3 were used.

(Example 8)

A laminate according to Example 8 was obtained in the same manner as in Example 6 except that the gas barrier coat was not formed.

(Example 9)

A laminate according to Example 9 was obtained in the same manner as in Example 1 except that the gas barrier coat was not formed.

(Example 10)

A laminate according to Example 10 was obtained in the same manner as in Example 4 except that the gas barrier coat was not formed and the gas barrier adhesive described above was used as an adhesive.

(Example 17)

A laminate according to Example 17 was obtained in the same manner as in Example 1 except that the above solvent-free adhesive was used as an adhesive and the additive amount of the adhesive was set so that the dry thickness of the adhesive layer was 2 $\mu$m.

(Example 18)

A laminate according to Example 18 was obtained in the same manner as in Example 4 except that the above solvent-free adhesive was used as an adhesive and the additive amount of the adhesive was set so that the dry thickness of the adhesive layer was 2 $\mu$m.

(Example 19)

A laminate according to Example 19 was obtained in the same manner as in Example 8 except that the above solvent-free adhesive was used as an adhesive and the additive amount of the adhesive was set so that the dry thickness of the adhesive layer was 2 $\mu$m.

(Comparative Examples 5, 9 and 10)

Laminates according to Comparative Examples 5, 9 and 10 were obtained in the same manner as in Example 8 except that the resin films shown in Table 3 were used.

<Determination of Degree of Crystallinity of Substrate and Ratio R of Crystalline Peak Area of (200) Plane of Polyethylene to Total Peak Area>

Before preparation of the laminate, the degree of crystallinity and the ratio R of the crystalline peak area of the (200) plane of polyethylene to the total peak area were determined for the resin film as the substrate by a parallel beam method of X-ray diffraction.
Specifically, first, a film measuring 10 mm $\times$ 50 mm was cut out from each of the resin films $\alpha1$ to $\alpha15$ to obtain a measurement sample.
Next, the measurement sample was placed on the sample stage of a wide-angle X-ray diffractometer (trade name: ATX-G, manufactured by Rigaku Holdings Corporation).
Next, out-of-plane measurement was performed under the following measurement conditions, and a $2\theta/\theta$ scan was performed in the diffraction angle range of 10° to 30° to obtain an X-ray diffraction pattern. The X-ray used was characteristic X-ray CuK$\alpha$, which was collimated by a multilayer mirror and incident, and a scintillation detector provided with a flat collimator was used as the light receiving unit. The measurement conditions were as follows.

(Measurement Conditions)

· Attenuator: 1/800

· Step width: 0.02°

· Scan speed: 2.0°/min

Finally, the obtained X-ray diffraction pattern was subjected to separation analysis to determine each crystalline peak area S1 and a halo pattern area S2 derived from amorphous component. The sum of these areas S (= S1+S2) was taken as the total peak area, and the degree of crystallinity of the substrate was calculated based on the following formula (1). Tables 2 to 4 show the results.

$$\text{Degree of crystallinity (\%)} = 100 \times S1/S \ (= S1+S2) \ ... \ (1)$$

Further, from the X-ray diffraction pattern obtained as above, the crystalline peak area S3 corresponding to the (200) plane of polyethylene was determined. Then, the ratio R of the crystalline peak area S3 of the (200) plane of polyethylene to the total peak area S was calculated based on the following formula (2).

$$R(\%) = 100 \times S3/S \ (= S1+S2) \ ... \ (2)$$

Thus, the degree of crystallinity of the substrate, and the ratio R of the crystalline peak area of the (200) plane of polyethylene to the total peak area were determined. Tables 2 to 4 show the results.

(1) Water Vapor Permeability

(Water Vapor Permeability before Boiling Treatment)

The water vapor permeability of the laminate of each of the examples and comparative examples was measured in accordance with JIS K-7126, method B under the following measurement conditions. The results are shown in Tables 5 to 7 as the water vapor permeability before boiling treatment.

(Measurement Conditions)

· Measurement device: PERMATRAN-W 3/34G (trade name), manufactured by MOCON Inc.

· Measurement atmosphere: 40°C, 90%RH

(Water Vapor Permeability after Boiling Treatment)

First, two A5-size samples were cut out from the laminates of each of the examples and comparative examples, and the samples were overlapped with each other with the heat seal layers inside. Only three sides of the two laminates were heat-sealed, leaving the remaining side unsealed, to form a pouch having an opening.
Next, the pouch was filled with 150 ml of tap water through the opening, and the remaining side was heat-sealed to prepare a four-side sealed pouch.
Next, the four-side sealed pouch was subjected to boiling treatment (heat sterilization treatment) in hot water at 90°C for 30 minutes.
Finally, a portion of the four-side sealed pouch after the boiling treatment was cut out and sufficiently dried to obtain a laminate after the boiling treatment.
Then, the water vapor permeability of the laminate after the boiling treatment was measured in the same manner as that before the boiling treatment. Tables 5 to 7 show the results.

(2) Oxygen Permeability

(Oxygen Permeability before Boiling Treatment)

The oxygen permeability of the laminate of each of the examples and comparative examples was measured in accordance with JIS K-7126, method B under the following measurement conditions. The results are shown in Tables 5 to 7 as the oxygen permeability before boiling treatment.

(Measurement Conditions)

· Measurement device: OXTRAN-2/22 (trade name), manufactured by MOCON Inc.

· Measurement atmosphere: 30°C, 70%RH

(Oxygen Permeability after Boiling Treatment)

A four-side sealed pouch was prepared in the same manner as in (1) above, and the four-side sealed pouch was subjected to boiling treatment (heat sterilization treatment) in hot water at 90°C for 30 minutes.
Next, a portion of the four-side sealed pouch after the boiling treatment was cut out and sufficiently dried to obtain a laminate after the boiling treatment.
Then, the oxygen permeability of the laminate after the boiling treatment was measured in the same manner as that before the boiling treatment. Tables 5 to 7 show the results.

(3) Adhesion

A four-side sealed pouch was prepared in the same manner as in (1) above, and the four-side sealed pouch was subjected to boiling treatment (heat sterilization treatment) in hot water at 90°C for 30 minutes.
Next, a portion of the four-side sealed pouch after the boiling treatment was cut out and sufficiently dried to obtain a strip-shaped test piece having a width of 15 mm and a length of 100 mm.
Then, the test piece was subjected to a T-peel test using a Tensilon universal testing machine RTC-1250 (manufactured by Orientec Corporation). The T-peel test was performed in accordance with JIS K 6854-3 under the following conditions, so that the gas barrier film and the heat seal layer were separated. The tensile strength at the time of separation of the gas barrier film and the heat seal layer was taken as the adhesion strength of the laminate. Tables 5 to 7 show the results. The adhesion strength is an index of the adhesion between the gas barrier film and the heat seal layer.

(Test Conditions)

· Distance between chucks: 15 mm

· Tensile rate: 300 mm/min

[Table 2]

| | Substrate | | | Undercoat layer | Inorganic layer | Gas barrier coat |
|---|---|---|---|---|---|---|
| | Resin film | Degree of crystallinity | Ratio of crystalline peak area of (200) plane | | | |
| Ex. 1 | α1 | 22.2% | 4.4% | Yes | Silicon oxide | Organic-inorganic composite coat |
| Ex. 2 | α2 | 27.8% | 6.6% | Yes | Silicon oxide | Organic-inorganic composite coat |
| Ex. 3 | α1 | 22.2% | 4.4% | No | Silicon oxide | Organic-inorganic composite coat |
| Ex. 4 | α1 | 22.2% | 4.4% | Yes | Aluminum oxide | Polycarboxylic acid polyvalent metal salt layer |
| Ex. 5 | α2 | 27.8% | 6.6% | Yes | Aluminum oxide | Polycarboxylic acid polyvalent metal salt layer |
| Ex. 6 | α1 | 22.2% | 4.4% | Yes | Silicon oxide | Organic-inorganic composite coat |
| Ex. 7 | α2 | 27.8% | 6.6% | Yes | Silicon oxide | Organic-inorganic composite coat |
| Ex. 8 | α1 | 22.2% | 4.4% | Yes | Silicon oxide | No |
| Ex. 9 | α1 | 22.2% | 4.4% | Yes | Silicon oxide | No |
| Ex. 10 | α1 | 22.2% | 4.4% | Yes | Aluminum oxide | No |

[Table 3]

| | Substrate | | | Undercoat layer | Inorganic layer | Gas barrier coat |
|---|---|---|---|---|---|---|
| | Resin film | Degree of crystallinity | Ratio of crystalline peak area of (200) plane | | | |
| Comp. Ex. 1 | α3 | 18.1% | 1.2% | Yes | Silicon oxide | Organic-inorganic composite coat |
| Comp. Ex. 2 | α4 | 16.3% | 0.3% | Yes | Silicon oxide | Organic-inorganic composite coat |

(continued)

| | Substrate | | | Undercoat layer | Inorganic layer | Gas barrier coat |
| | Resin film | Degree of crystallinity | Ratio of crystalline peak area of (200) plane | | | |
|---|---|---|---|---|---|---|
| Comp. Ex. 3 | α3 | 18.1% | 1.2% | Yes | Aluminum oxide | Polycarboxylic acid polyvalent metal salt layer |
| Comp. Ex. 4 | α4 | 16.3% | 0.3% | Yes | Aluminum oxide | Polycarboxylic acid polyvalent metal salt layer |
| Comp. Ex. 5 | α3 | 18.1% | 1.2% | Yes | Silicon oxide | No |
| Comp. Ex. 6 | α5 | 58.7% | 36.9% | Yes | Silicon oxide | Organic-inorganic composite coat |
| Comp. Ex. 7 | α6 | 88.6% | 19.7% | Yes | Silicon oxide | Organic-inorganic composite coat |
| Comp. Ex. 8 | α5 | 58.7% | 36.9% | Yes | Aluminum oxide | Polycarboxylic acid polyvalent metal salt layer |
| Comp. Ex. 9 | α5 | 58.7% | 36.9% | Yes | Silicon oxide | No |
| Comp. Ex. 10 | α6 | 88.6% | 19.7% | Yes | Silicon oxide | No |

[Table 4]

| | Substrate | | | Undercoat layer | Inorganic layer | Gas barrier coat |
| | Resin film | Degree of crystallinity | Ratio of crystalline peak area of (200) plane | | | |
|---|---|---|---|---|---|---|
| Ex. 11 | α7 | 27.6% | 2.4% | Yes | Silicon oxide | Organic-inorganic composite coat |
| Ex. 12 | α8 | 25.1% | 2.2% | Yes | Silicon oxide | Organic-inorganic composite coat |
| Ex. 13 | α9 | 15.4% | 6.9% | Yes | Silicon oxide | Organic-inorganic composite coat |
| Ex. 14 | α10 | 18.0% | 4.2% | Yes | Silicon oxide | Organic-inorganic composite coat |
| Ex. 15 | α11 | 22.3% | 5.1% | Yes | Silicon oxide | Organic-inorganic composite coat |
| Ex. 16 | α12 | 26.5% | 2.7% | Yes | Silicon oxide | Organic-inorganic composite coat |
| Ex. 17 | α1 | 22.2% | 4.4% | Yes | Silicon oxide | Organic-inorganic composite coat |
| Ex. 18 | α1 | 22.2% | 4.4% | Yes | Aluminum oxide | Polycarboxylic acid polyvalent metal salt layer |
| Ex. 19 | α1 | 22.2% | 4.4% | Yes | Silicon oxide | No |

(continued)

| | Substrate | | | Undercoat layer | Inorganic layer | Gas barrier coat |
|---|---|---|---|---|---|---|
| | Resin film | Degree of crystallinity | Ratio of crystalline peak area of (200) plane | | | |
| Comp. Ex. 11 | α13 | 13.0% | 0.8% | Yes | Silicon oxide | Organic-inorganic composite coat |
| Comp. Ex. 12 | α14 | 20.4% | 1.4% | Yes | Silicon oxide | Organic-inorganic composite coat |
| Comp. Ex. 13 | α15 | 16.3% | 0.8% | Yes | Silicon oxide | Organic-inorganic composite coat |

[Table 5]

| | Water Vapor Permeability | | | Oxygen Permeability | | Adhesion |
|---|---|---|---|---|---|---|
| | g/(m$^2$·day) | | | cm$^2$/(m$^2$·day·atm) | | Adhesion strength |
| | Before boiling A | After boiling B | B-A | Before boiling | After boiling | N/15 mm |
| Ex. 1 | 0.2 | 0.8 | 0.6 | 1.5 | 1.9 | 8.7 |
| Ex. 2 | 0.2 | 0.7 | 0.5 | 1.3 | 2.1 | 8.4 |
| Ex. 3 | 0.4 | 1.1 | 0.7 | 0.5 | 0.5 | 8.2 |
| Ex. 4 | 0.5 | 1.3 | 0.8 | 0.7 | 0.6 | 7.8 |
| Ex. 5 | 0.5 | 1.2 | 0.7 | 0.3 | 0.6 | 7.7 |
| Ex. 6 | 0.2 | 0.9 | 0.7 | 0.3 | 0.6 | 8.5 |
| Ex. 7 | 0.3 | 0.8 | 0.5 | 0.2 | 0.5 | 8.1 |
| Ex. 8 | 0.2 | 0.8 | 0.6 | 0.9 | 1.6 | 7.9 |
| Ex. 9 | 0.5 | 1.1 | 0.6 | 4.0 | 6.2 | 7.5 |
| Ex. 10 | 0.6 | 1.6 | 1.0 | 2.2 | 5.3 | 5.8 |

[Table 6]

| | Water Vapor Permeability | | | Oxygen Permeability | | Adhesion |
|---|---|---|---|---|---|---|
| | g/(m$^2$·day) | | | cm$^2$/(m$^2$·day·atm) | | Adhesion strength |
| | Before boiling A | After boiling B | B-A | Before boiling | After boiling | N/15 mm |
| Comp. Ex. 1 | 0.6 | 2.3 | 1.7 | 1.6 | 2.3 | 8.4 |
| Comp. Ex. 2 | 0.8 | 3.3 | 2.5 | 1.4 | 2.1 | 8.4 |
| Comp. Ex. 3 | 1.2 | 2.7 | 1.5 | 0.7 | 0.7 | 7.3 |
| Comp. Ex. 4 | 1.3 | 4.0 | 2.7 | 0.6 | 0.8 | 8.3 |
| Comp. Ex. 5 | 1.0 | 2.4 | 1.4 | 1.0 | 1.9 | 8.4 |
| Comp. Ex. 6 | 0.6 | 3.1 | 2.5 | 1.2 | 2.8 | 0.8 |
| Comp. Ex. 7 | 0.5 | 3.3 | 2.8 | 1.0 | 1.9 | 0.5 |
| Comp. Ex. 8 | 0.8 | 3.8 | 3.0 | 0.6 | 0.7 | 0.8 |
| Comp. Ex. 9 | 0.5 | 2.7 | 2.2 | 1.1 | 1.8 | 1.0 |
| Comp. Ex. 10 | 0.4 | 2.5 | 2.1 | 0.9 | 1.8 | 1.1 |

[Table 7]

| | Water Vapor Permeability | | | Oxygen Permeability | | Adhesion |
| | g/(m²·day) | | | cm²/(m²·day·atm) | | Adhesion strength |
| | Before boiling A | After boiling B | B-A | Before boiling | After boiling | N/15 mm |
|---|---|---|---|---|---|---|
| Ex. 11 | 0.4 | 1.2 | 0.8 | 1.7 | 2.8 | 8.5 |
| Ex. 12 | 0.5 | 1.4 | 0.9 | 1.8 | 3.1 | 7.6 |
| Ex. 13 | 0.2 | 0.8 | 0.6 | 1.5 | 2.6 | 7.4 |
| Ex. 14 | 0.3 | 1.0 | 0.7 | 1.5 | 3.5 | 7.8 |
| Ex. 15 | 0.2 | 0.7 | 0.5 | 1.3 | 2.6 | 7.6 |
| Ex. 16 | 0.4 | 1.1 | 0.7 | 1.8 | 3.9 | 7.4 |
| Ex. 17 | 0.2 | 0.7 | 0.5 | 1.2 | 1.8 | 7.7 |
| Ex. 18 | 0.5 | 1.2 | 0.7 | 0.4 | 0.5 | 6.4 |
| Ex. 19 | 0.4 | 0.9 | 0.5 | 3.2 | 5.6 | 6.8 |
| Comp. Ex. 11 | 0.7 | 2.8 | 2.1 | 1.6 | 3.1 | 8.2 |
| Comp. Ex. 12 | 0.6 | 2.3 | 1.7 | 1.4 | 2.9 | 7.2 |
| Comp. Ex. 13 | 0.7 | 2.3 | 1.6 | 1.8 | 3.3 | 7.2 |

From the results shown in Tables 5 to 7, in Examples 1 to 19, the water vapor permeability before boiling treatment was 2.0 g/(m²·day) or less, and the difference in water vapor permeability before and after the boiling treatment was 1.0 g/(m²·day) or less, which was sufficiently small. In Examples 1 to 19, the adhesion strength after boiling was 5.0 N/15 mm or greater, which was a sufficiently large value.

On the other hand, in Comparative Examples 1 to 5 and 11 to 13, in which the ratio of the crystalline peak area of the (200) plane of polyethylene to the total peak area of the substrate was less than 2.0%, the difference in the water vapor permeability before and after the boiling treatment was 1.4 g/(m²·day) or greater, and the water vapor permeability was greatly changed between before and after the boiling treatment.

In Comparative Examples 6 to 10, in which the degree of crystallinity of the substrate was greater than 35.0%, the difference in the water vapor permeability before and after the boiling treatment was 2.0 g/(m²·day) or greater, and the water vapor permeability was greater changed between before and after the boiling treatment. Further, the adhesion strength was less than 5.0 N/15 mm, which was a sufficiently small value.

As seen from the above, the gas barrier film of the present disclosure was found to have excellent water vapor barrier properties, be able to suppress deterioration of the water vapor barrier properties even after undergoing heat sterilization treatment, and have high adhesion to the heat seal layer.

The summary of the present disclosure is as follows.

[1] A gas barrier film including: a substrate containing polyethylene; and

a barrier layer formed on one surface of the substrate,

the barrier layer including at least one of an inorganic layer and a gas barrier coat, wherein

in an X-ray diffraction pattern measured by a parallel beam method of X-ray diffraction for the substrate, a degree of crystallinity, which is a ratio of a crystalline peak area to a total peak area in a diffraction angle range of 10° to 30°, is 35.0% or less, and

a ratio of a crystalline peak area of the (200) plane of polyethylene to a total peak area is 2.0% or greater.

[2] The gas barrier film according to [1], wherein the polyethylene has a density of 0.940 g/cm³ or greater.

[3] The gas barrier film according to [1] or [2], wherein the substrate is a non-oriented film.

[4] The gas barrier film according to any of [1] to [3], wherein the inorganic layer is made of aluminum oxide or silicon oxide.

[5] The gas barrier film according to any of [1] to [4], wherein the gas barrier coat is a coat obtained using a composition containing at least one selected from the group consisting of a metal alkoxide, a hydrolysate of a metal alkoxide, a reaction product of a metal alkoxide and a reaction product of a hydrolysate of a metal alkoxide, and a water-soluble polymer.

[6] The gas barrier film according to [5], wherein the composition further contains at least one selected from the group consisting of a silane coupling agent, a hydrolysate of a silane coupling agent, a reaction product of a silane coupling agent, and a reaction product of a hydrolysate of a silane coupling agent.

[7] The gas barrier film according to any of [1] to [4], wherein the gas barrier coat contains a polyvalent metal salt of a polycarboxylic acid polymer.

[8] The gas barrier film according to any of [1] to [7], wherein the substrate is a multilayer polyethylene film having a surface layer, an intermediate layer and a back layer, the multilayer polyethylene film being formed by a blown film extrusion process in which each of the polyethylenes constituting the surface layer, the intermediate layer and the back layer are loaded into an extruder, the polyethylenes are melt-kneaded and then discharged from the extruder through a die.

[9] A laminate including:

the gas barrier film according to any of [1] to [8]; and

a heat seal layer bonded to the gas barrier film with the barrier layer being sandwiched between the substrate and the heat seal layer.

[10] The laminate according to [9], wherein the heat seal layer contains polyethylene.

[11] The laminate according to [9] or [10], further including an adhesive layer that bonds the gas barrier film and the heat seal layer to each other.

[12] The laminate according to [11], wherein the adhesive layer is obtained using a gas barrier adhesive.

[13] The laminate according to [11], wherein the adhesive layer is obtained using a solvent-free adhesive.

[14] The laminate according to [13], wherein the solvent-free adhesive contains a two-component curing type urethane adhesive.

[15] The laminate according to any of [9] to [15], further including a second adhesive layer and a surface substrate layer in this order on a surface of the substrate of the laminate on a side opposite to that facing the heat seal layer.

[16] A packaging bag produced using the laminate according to any of [8] to [15].

[17] A package including:

the packaging bag according to [16]; and

contents contained in the packaging bag.

[18] The laminate according to any of [9], [14] or [15], further including:

an adhesive layer between the barrier layer and the heat seal layer; and

an undercoat layer between the substrate and the barrier layer,

the barrier layer including an inorganic layer and a gas barrier coat in this order from the undercoat layer side, wherein

the adhesive layer is a layer that bonds the gas barrier coat and the heat seal layer to each other,

the substrate is a non-oriented film composed of a surface layer, an intermediate layer and a back layer,

the substrate has a density of 0.940 g/cm³ or greater,

the substrate has a thickness of 15 µm to 35 µm,

the surface layer and the back layer have the same thickness,

a ratio of a thickness of the intermediate layer to the thickness of the surface layer is from 2 to 3,

the inorganic layer is made of silicon oxide,

the undercoat layer has a thickness of 0.01 µm to 0.1 µm,

the inorganic layer has a thickness of 10 nm to 30 nm,

the gas barrier coat is a coat obtained using a composition containing at least one selected from the group consisting of a metal alkoxide, a hydrolysate of a metal alkoxide, a reaction product of a metal alkoxide and a reaction product of a hydrolysate of a metal alkoxide, and a water-soluble polymer,

the heat seal layer is a layer made of linear low-density polyethylene,

the adhesive layer is a layer obtained using a solvent-free adhesive,

the X-ray diffraction pattern is an X-ray diffraction pattern obtained by a 2θ/θ scan in the diffraction angle range of 10° to 30° in out-of-plane measurement using a wide-angle X-ray diffractometer,

when a crystalline peak area obtained by separating and analyzing crystalline peaks derived from crystalline components and halo patterns derived from amorphous components in the X-ray diffraction pattern is S1, a halo pattern area is S2, and a crystalline peak area corresponding to a (200) plane of polyethylene obtained by separating and analyzing peaks corresponding to a (110) plane and a (200) plane of polyethylene for the crystalline peaks is S3, the degree of crystallinity is obtained by the following formula (1) and the ratio is obtained by the following formula (2),

the crystallinity is 15.0% to 35.0%, and

the ratio is from 2.0% to 7.0%:

$$\text{Degree of crystallinity } (\%) = 100 \times S1 / (S1+S2) \ ... \ (1)$$

$$\text{Ratio } (\%) = 100 \times S3 / (S1+S2) \ ... \ (2)$$

[Industrial Applicability]

The gas barrier film of the present disclosure has excellent water vapor barrier properties, can suppress deterioration of the water vapor barrier properties even after undergoing heat sterilization treatment, and has high adhesion to the heat seal layer. Therefore, laminates having the gas barrier film of the present disclosure can be suitably used as various packaging materials, and are particularly suitable for the packaging materials that undergo boiling treatment, and packages having this laminate can maintain the quality of the contents for a long period of time. The laminate and gas barrier film of the present disclosure can also be used for applications other than packaging materials. Examples of the applications other than packaging materials include films for electronic devices, films for solar batteries, various functional films for fuel cells, and substrate films.

[Reference Signs List]

| 1 | Substrate, |
|---|---|
| 2 | Gas barrier coat, |
| 4 | Heat seal layer, |
| 6 | Adhesive layer, |
| 7 | Inorganic layer, |
| 8 | Barrier layer, |
| 9 | Undercoat layer, |
| 10 | Gas barrier film, |
| 12 | Surface layer, |
| 13 | Intermediate layer, |
| 14 | Back layer, |
| 16 | Second adhesive layer, |
| 18 | Surface substrate layer, |
| 30, 32, 34 | Laminate, |
| 40 | Packaging bag, |
| C | Contents, |
| 50 | Package. |

**Claims**

1. A gas barrier film comprising:

   a substrate containing polyethylene; and a barrier layer formed on one surface of the substrate, the barrier layer including at least one of an inorganic layer and a gas barrier coat, wherein
   in an X-ray diffraction pattern measured by a parallel beam method of X-ray diffraction for the substrate, a degree of crystallinity, which is a ratio of a crystalline peak area to a total peak area in a diffraction angle range of 10° to 30°, is 35.0% or less, and a ratio of a crystalline peak area of the (200) plane of polyethylene to a total peak area is 2.0% or greater.

2. The gas barrier film according to claim 1, wherein
   the polyethylene has a density of 0.940 g/cm$^3$ or greater.

3. The gas barrier film according to claim 1, wherein
   the substrate is a non-oriented film.

4. The gas barrier film according to claim 1, wherein
   the inorganic layer is made of aluminum oxide or silicon oxide.

**5.** The gas barrier film according to claim 1, wherein
the gas barrier coat is a coat obtained using a composition containing at least one selected from the group consisting of a metal alkoxide, a hydrolysate of a metal alkoxide, a reaction product of a metal alkoxide and a reaction product of a hydrolysate of a metal alkoxide, and a water-soluble polymer.

**6.** The gas barrier film according to claim 5, wherein
the composition further contains at least one selected from the group consisting of a silane coupling agent, a hydrolysate of a silane coupling agent, a reaction product of a silane coupling agent, and a reaction product of a hydrolysate of a silane coupling agent.

**7.** The gas barrier film according to claim 1, wherein
the gas barrier coat contains a polyvalent metal salt of a polycarboxylic acid polymer.

**8.** The gas barrier film according to claim 1, wherein
the substrate is a multilayer polyethylene film having a surface layer, an intermediate layer and a back layer, the multilayer polyethylene film being formed by a blown film extrusion process in which each of the polyethylenes constituting the surface layer, the intermediate layer and the back layer are loaded into an extruder, the polyethylenes are melt-kneaded and then discharged from the extruder through a die.

**9.** A laminate comprising:

the gas barrier film according to any one of claims 1 to 8; and
a heat seal layer bonded to the gas barrier film with the barrier layer being sandwiched between the substrate and the heat seal layer.

**10.** The laminate according to claim 9, wherein
the heat seal layer contains polyethylene.

**11.** The laminate according to claim 9, further comprising an adhesive layer that bonds the gas barrier film and the heat seal layer to each other.

**12.** The laminate according to claim 11, wherein
the adhesive layer is obtained using a gas barrier adhesive.

**13.** The laminate according to claim 11, wherein
the adhesive layer is obtained using a solvent-free adhesive.

**14.** The laminate according to claim 13, wherein
the solvent-free adhesive contains a two-component curing type urethane adhesive.

**15.** The laminate according to claim 9, further comprising a second adhesive layer and a surface substrate layer in this order on a surface of the substrate of the laminate on a side opposite to that facing the heat seal layer.

**16.** A packaging bag produced using the laminate according to claim 9.

**17.** A package comprising:

the packaging bag according to claim 16; and
contents contained in the packaging bag.

**18.** A laminate according to claim 9, further comprising:

an adhesive layer between the barrier layer and the heat seal layer; and
an undercoat layer between the substrate and the barrier layer,
the barrier layer including an inorganic layer and a gas barrier coat in this order from the undercoat layer side, wherein
the adhesive layer is a layer that bonds the gas barrier coat and the heat seal layer to each other,
the substrate is a non-oriented film composed of a surface layer, an intermediate layer and a back layer,

the substrate has a density of 0.940 g/cm$^3$ or greater,

the substrate has a thickness of 15 μm to 35 μm,

the surface layer and the back layer have the same thickness,

a ratio of a thickness of the intermediate layer to the thickness of the surface layer is from 2 to 3,

the inorganic layer is made of silicon oxide,

the undercoat layer has a thickness of 0.01 μm to 0.1 μm,

the inorganic layer has a thickness of 10 nm to 30 nm,

the gas barrier coat is a coat obtained using a composition containing at least one selected from the group consisting of a metal alkoxide, a hydrolysate of a metal alkoxide, a reaction product of a metal alkoxide and a reaction product of a hydrolysate of a metal alkoxide, and a water-soluble polymer,

the heat seal layer is a layer made of linear low-density polyethylene,

the adhesive layer is a layer obtained using a solvent-free adhesive,

the X-ray diffraction pattern is an X-ray diffraction pattern obtained by a 2θ/θ scan in the diffraction angle range of 10° to 30° in out-of-plane measurement using a wide-angle X-ray diffractometer,

when a crystalline peak area obtained by separating and analyzing crystalline peaks derived from crystalline components and halo patterns derived from amorphous components in the X-ray diffraction pattern is S1, a halo pattern area is S2, and a crystalline peak area corresponding to a (200) plane of polyethylene obtained by separating and analyzing peaks corresponding to a (110) plane and a (200) plane of polyethylene for the crystalline peaks is S3, the degree of crystallinity is obtained by the following formula (1) and the ratio is obtained by the following formula (2),

the crystallinity is 15.0% to 35.0%, and

the ratio is from 2.0% to 7.0%:

$$\text{Degree of crystallinity } (\%) = 100 \times S1 / (S1+S2) \ ... \ (1)$$

$$\text{Ratio } (\%) = 100 \times S3 / (S1+S2) \ ... \ (2)$$

FIG.1

FIG.2

FIG.3

# FIG.4

50

40

30   30

42

41

42

C

## INTERNATIONAL SEARCH REPORT

| International application No. |
| --- |
| **PCT/JP2024/034232** |

| A. | CLASSIFICATION OF SUBJECT MATTER |
| --- | --- |

*B32B 27/32*(2006.01)i; *B65D 30/02*(2006.01)i; *B65D 65/40*(2006.01)i
FI:  B32B27/32 Z; B65D30/02; B65D65/40 D

According to International Patent Classification (IPC) or to both national classification and IPC

| B. | FIELDS SEARCHED |
| --- | --- |

Minimum documentation searched (classification system followed by classification symbols)

B32B27/32; B65D30/02; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2023-132672 A (TOPPAN INC.) 22 September 2023 (2023-09-22) claims, paragraphs [0008], [0016], [0018], [0021]-[0022], [0027], [0043], [0045], [0059]-[0060], [0060], [0062], [0070] | 1-18 |
| Y | JP 2021-185230 A (UNITIKA LTD.) 09 December 2021 (2021-12-09) paragraph [0027] | 1-18 |
| Y | JP 2021-518281 A (ADVANSIX RESINS & CHEMICALS LLC) 02 August 2021 (2021-08-02) paragraph [0062] | 1-18 |
| Y | JP 2022-39001 A (ASAHI KASEI CORPORATION) 10 March 2022 (2022-03-10) paragraph [0085] | 1-18 |
| A | JP 2014-184562 A (SUMITOMO BAKELITE CO., LTD.) 02 October 2014 (2014-10-02) entire text | 1-18 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 December 2024** | **24 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/034232**

| Patent document cited in search report | | | Publication date (day/month/year) | Patent family member(s) | | | Publication date (day/month/year) |
|---|---|---|---|---|---|---|---|
| JP | 2023-132672 | A | 22 September 2023 | (Family: none) | | | |
| JP | 2021-185230 | A | 09 December 2021 | US | 2024/0018316 | A1 | |
| | | | | paragraph [0071] | | | |
| | | | | WO | 2021/182402 | A1 | |
| | | | | EP | 4029801 | A1 | |
| | | | | KR | 10-2022-0082108 | A | |
| | | | | CN | 114728717 | A | |
| | | | | CA | 3140179 | A1 | |
| | | | | TW | 202140610 | A | |
| JP | 2021-518281 | A | 02 August 2021 | US | 2019/0283370 | A1 | |
| | | | | paragraph [0070] | | | |
| | | | | WO | 2019/177865 | A1 | |
| | | | | EP | 3765286 | A1 | |
| | | | | TW | 201940344 | A | |
| | | | | KR | 10-2020-0133353 | A | |
| | | | | CN | 112074406 | A | |
| | | | | CA | 3093466 | A1 | |
| | | | | BR | 112020018696 | A | |
| | | | | MX | 2020009477 | A | |
| | | | | DK | 3765286 | T | |
| | | | | ES | 2938750 | T | |
| | | | | PL | 3765286 | T | |
| | | | | HU | E060944 | T | |
| JP | 2022-39001 | A | 10 March 2022 | (Family: none) | | | |
| JP | 2014-184562 | A | 02 October 2014 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6191221 B
- JP 2000254994 A
- JP 4373797 B